# EUROPEAN PATENT SPECIFICATION

(11) **EP 3 340 530 B1**
(45) Date of publication and mention of the grant of the patent: **28.04.2021**
(21) Application number: 16290250.6
(22) Date of filing: 23.12.2016
(51) Int. Cl.: H04L 9/08, H04L 29/06

(54) **TRANSPORT LAYER SECURITY (TLS) BASED METHOD TO GENERATE AND USE A UNIQUE PERSISTENT NODE IDENTITY, AND CORRESPONDING CLIENT AND SERVER**
VERFAHREN AUF BASIS VON TRANSPORTSCHICHTSICHERHEIT (TLS) ZUR ERZEUGUNG UND VERWENDUNG EINER EINDEUTIGEN PERSISTENTEN KNOTENIDENTITÄT UND ZUGEHÖRIGER CLIENT UND SERVER
PROCÉDÉ BASÉ SUR LA SÉCURITÉ DE COUCHE DE TRANSPORT POUR GÉNÉRER ET UTILISER UNE IDENTITÉ DE NOEUD PERSISTANT UNIQUE ET CLIENT ET SERVEUR CORRESPONDANT

(43) Date of publication of application: 27.06.2018
(73) Proprietor: Alcatel Lucent, 91620 Nozay (FR)
(72) Inventor: VAN DE Velde, Thierry, 2018 Antwerpen (BE)
(74) Representative: IP HILLS NV

(56) References cited:
- Jean-Michel Combes ET AL: "CGA as alternative security credentials with IKEv2: implementation and analysis", , 23 May 2012 (2012-05-23), XP055357254, Retrieved from the Internet: URL:https://aurelien.wail.ly/publications/ sarssi-2012.pdf [retrieved on 2017-03-21]
- Valer Bocan: "Threshold Puzzles: The Evolution of DOS-resistant Authentication", Transactions on AUTOMATIC CONTROL and COMPUTER SCIENCE, 1 January 2004 (2004-01-01), pages 1224-600, XP055384671, Retrieved from the Internet: URL:http://www.iswint.utt.ro/virtual/conti .ac.upt.ro/saved2004/papers_upload/ 8_7_11.pdf
- DREW DEAN* XEROX PARC DDEANPIARC XEROX COM ADAM STUBBLEFIELDT RICE UNIVERSITY ASTUBBLERHOICE EDU: "Using Client Puzzles to Protect TLS", USENIX,, 2 January 2002 (2002-01-02), pages 1-9, XP061010995, [retrieved on 2002-01-02]

## Description

### Technical Field

The present invention generally relates to the identification of nodes in communication networks. Nodes can for instance be endpoints like user devices, objects, sensors, virtual machines, containers, computer programs, etc., or intermediate nodes like gateways, proxy's, switches, etc., that relay or forward traffic in communication networks. The identification of such nodes is necessary for the purpose of authenticating and authorizing access to certain services, and possibly also for the purpose of charging for certain services.

### Background

Before a node is admitted to join a communication network, it needs to be identified. In the ISO OSI model, each layer starting from layer 2 or above, uses distinct parameters to identify each endpoint, and a superior OSI layer trusts the identity provided by an inferior OSI layer.

At present, various public identities are used for instance by endpoints connecting to telecommunication networks. Examples are the International Mobile Equipment Identity (IMEI) as used in 3GPP or third generation mobile networks, or an extended unique identifier like MAC-48, EUI-48, EUI-64 as used in IEEE networks. These public identities are access technology specific. Other examples like the International Mobile Subscriber Identity (ITU-T E.212 IMSI), the Mobile Subscriber Integrated Services Digital Network number (ITU-T E.164 MSISDN), the Security Certificate (ITU-T X.509), the Internet Protocol Address (IETF IPv4 or IPv6, the e-mail address, the Facebook user name, etc.), are access technology independent public identities.

### Summary

As mentioned here above, certain endpoint identities are specific to one particular wireless or wireline access technology, e.g. Wi-Fi, Bluetooth, LoRa, Zigbee, Ethernet, LTE, etc. An increasing number of endpoints however is connected to multiple access technologies, either simultaneously or at different times. Consequently, there is a growing demand for a persistent unique identity that is independent of the access network technology and further resolves one or more of the problems mentioned below.

It is difficult to guarantee the uniqueness of public identities within a communication network. The IMEI, MAC addresses or IMSI can easily be duplicated by a manufacturer of endpoints or by other organizations. IP addresses can be spoofed. There is in general no computational difficulty to generate a public identity. Anyone who is aware of the published format, e.g. by 3GPP, ITU-T, IETF, etc., can generate a valid public identity and use it in an attempt to join the communication network. If endpoints are admitted without prior authentication with a central authority, which happens for instance in certain IEEE 802 networks, duplicate endpoint identities can occur.

Therefore, prior to admitting an endpoint, several telecommunication networks authenticate that endpoint through a shared secret that is pre-provisioned in the endpoint and in the networks' central authentication system. An example of such pre-provisioned shared secret is the Authentication Key Ki in the 3GPP Subscriber Identity Module (SIM) and in the Home Subscriber Server (HSS), the public identity being the IMSI. Another example of such pre-provisioned shared secret is a password protecting access to an e-mail account.

The processes to distribute, renew and revoke these shared secrets require that there is a central authority in the network that is emitting them, and/or a roaming interconnection between the visited serving network and the home network where the endpoint's secret is known. In the example of 3GPP authentication, the HSS continuously generates authentication vectors using secret Ki and downloads these authentication vectors into the visited network element. The processes to issue or distribute, to renew and to revoke existing endpoint identities while ensuring their uniqueness consequently are tedious, costly and not scalable to massive Machine Type Communications (mMTC), also known as the Internet of Things (loT), defined as a network with at least one hundred thousand endpoints per square kilometre.

A further particular problem in the Internet of Things is that contrary to human beings, an object cannot subscribe to network services like for instance internet connectivity, mobility, being exposed and being actionable through APIs, etc. As a consequence there is a growing need for new models and processes that enable objects to autonomously identify with communication networks and gain access to network services without human intervention.

An existing alternative to pre-provisioned secrets is a Public Key Infrastructure (PKI). In the IEEE Public Key Infrastructure, the network node or an associated storage facility must possess the public key certificate (the root certificate) of the remote Certificate Authority having signed the endpoint's certificate in order to validate that endpoint's certificate locally. Thus, in the PKI the network node (i.e. a Security Gateway, Virtual Private Network Gateway or Tunnelled Layer Security server) can autonomously authenticate the endpoint's public key certificate without obtaining an authentication vector nor querying an authentication server in real-time, but the PKI relies on a previous process in which the endpoint's public key certificate must be submitted and signed by the Certificate Authority.

Furthermore, in the PKI the endpoint (the initiator) must possess the private key corresponding to the public key in its certificate, in order to decrypt the encrypted downstream traffic from the responder to the initiator. Either the private-public key pair is locally generated within the initiator, and then the initiator acts as Registration Authority submitting the certificate to the Certificate Authority for signature, or the private-public key pair is generated externally, submitted for signature and then the private key plus signed certificate must be transferred to the initiator through an unspecified process.

A straightforward solution to identify nodes in communication networks could rely on the selection of a large random identity, e.g. a 1024 bit random number, by the endpoint or initiator of a connection. The probability that two endpoints would pick the same identity for connectivity with the same communication network would be very low, which is a benefit over IP addresses, MAC addresses or IMSIs. However, the network could then not resist an attack consisting of the generation of an exaggerated number of identities. Since anyone could easily produce such identities the commercial value of such large random number is zero.

Cryptocurrency such as Bitcoins could solve the above mentioned problem since only a limited number of identities could ever be generated due to the computational difficulty condition imposed by a difficulty controller to generate Bitcoins. Bitcoins however cannot be used as identities of nodes in a communication network since existing telecommunication infrastructure such as security gateways, mobile gateways or broadband network gateways do not support the receipt of Bitcoins over standard telecommunication protocols

Combes J.-M. et al: "CGA as alternative security credentials with IKEv2: implementation and analysis," 23.05.2012, available from: https://aurelien.wail.ly/publications/sarssi-2012.pdf discloses relying on a difficulty factor to limit the number of valid identites in the generation of CGA or cryptographically generated addresses.

In Bocan, V.: "Threshold Puzzles: The Evolution of DOS-resistant Authentication", Transactions on AUTOMATIC CONTROL and COMPUTER SCIENCE Vol.49 (63), 2004, ISSN 1224-600X, is described the reliance upon cryptographic puzzles to increase the resistance of the TLS authentication against DoS attacks.

Summarizing, it is an objective to provide a mechanism for generating and using a unique persistent node identity for identifying and authenticating a node in a telecommunication network that is independent of the access technology; verifiable without relying on a central authentication server, registration nor certificate authority; safeguarding the network from an exaggerated number of valid node identities; and whose distribution, renewal and revocation is scalable to massive Machine Type Communications.

It is a further objective to provide a mechanism for generating such unique persistent node identity and restricting the use thereof to a particular time period, to a particular zone, i.e. a group of networks, a network or part of a network; and/or to a particular group of nodes sharing similar characteristics, e.g. cars, refrigerators, etc.

It is a further objective to provide a mechanism for generating and using such unique persistent node identity that builds on Transport Layer Security or TLS protocol, as this is the most widely spread security protocol in the Internet.

At present, during the setup of a TLS connection between client and server, the server picks a random value, named "random" or "server_random", and a random secret value X if an Ephemeral Diffie-Hellman algorithm is used such as in the DHE_DSS, DHE_RSA, ECDHE_RSA or ECDHE_ECDSA key exchange methods. A random secret value X is also picked in the DH_anon key exchange method. The client receives the corresponding public Diffie-Hellman value Y ("dh_Ys") from the server, as well as the generator ("dh_g") and prime modulus ("dh_p") for Diffie-Hellman. Next, and still in the case of a Diffie-Hellman exchange, the client also chooses a random secret value Xc and then sends the corresponding public Diffie-Hellman value Yc to the server in unencrypted format. Since it is easy for the server and the client to pick random values, the economic value of this process is zero. Consequently, if the client secret value Xc was to become the identity of the client then the network cannot resist an attack consisting of generating an exaggerated number of client identities. Another weakness of standard TLS with Diffie-Hellman key exchanges is that since Yc is transmitted unencrypted, if X is not sufficiently random then it becomes possible for an eavesdropper to try popular values for X and compute the Diffie-Hellman shared secret key value K from Yc, X and p. At last, in the case of kleptography, the values X appear to be random but are not: a backdoor private key or algorithm known to the attacker allows the attacker to compute secret X from public Y.

An embodiment of the invention is defined by claim 1.

The purpose of the TLS protocol is to establish a secure connection between client and server. The purpose of the computational algorithm, which may be embodied for instance through the Diffie-Hellman exchange as will be explained in more detail below, is to generate a shared key value K known by the TLS client and TLS server without allowing intermediate eavesdroppers to discover the shared key value K. Besides the existing pre-provisioned secrets and signed public key certificates, the present invention hence introduces a third category of node identity wherein the format of the node identity is also imposed by a standards organization or central authority, however wherein a difficulty controller further imposes a computational difficulty to generate the node identity herewith preventing an explosion of possible valid clients. As a result, the number of valid node identities remains limited and controllable, no private key nor shared secret must be pre-provisioned in each node, and no public key certificate must be submitted to a central authority for signature. The network still has a standards organization or central authority fixing the identity formats, but also a difficulty controller imposing computational difficulty conditions. The central authority is not involved in the authentication procedure of individual nodes or endpoints. The difficulty controller is consulted by the participating nodes in advance of the identification and authentication procedures. An endpoint like for instance an object in the Internet of Things (IoT) can thus autonomously generate an identity to initiate an association to a responding server, and use the autonomously generated identity in the identification and authentication procedure of the endpoint. Unlike with pre-shared keys there is no need for the initiator nor for the responder to contact any central authority in real time during the identification or authentication procedure. And unlike in the PKI there's no need to submit the identity for signature. Still the secrecy and integrity is achieved of the communication between the client and server. The present invention hence concerns a more desirable identification and authentication mechanism than pre-provisioned secrets and pre-signed public key certificates. Furthermore, the node identity generated according to the present invention is access technology independent. A single TLS client can establish a unique persistent node identity regardless of the different access technologies it is connected to. Moreover, the invention is resistant against Denial of Service (DoS) attacks since the difficulty condition prevents that a high number of identities is generated to overwhelm the network. With the present invention the total number of admitted nodes can be limited without central authority participating in the admission procedure nor signing security certificates.

In an embodiment of the invention, a TLS client and TLS server first obtain the difficulty condition D from a difficulty controller, i.e. a trusted entity in the network that controls difficulty levels. The difficulty condition D may for instance specify that the shared key value K must be numerically inferior or equal to a difficulty level. This difficulty level may be adapted over time by the difficulty controller in order for instance to guarantee that the probability to generate a valid unique persistent node identity remains the same when more computational power is used over time. The client then generates a client random number Rc and sends this client random number Rc in the TLS Handshake Protocol ClientHello message to the TLS server. This TLS ClientHello message typically contains a protocol version, the client random number Rc, a session identifier, a list of ciphering algorithms supported by the client, a list of compression algorithms supported by the client, and extension fields. Essential to the present invention is that the TLS ClientHello message or its equivalent contains the client random number Rc. In one of the extension fields, the TLS client may announce that it supports a specific mode wherein a unique persistent node identity is generated in line with the present invention. Upon receipt of the TLS ClientHello message, the TLS server enters a special mode wherein it generates a server secret value X as a pseudo-random function of a server random number Rs which itself is the result of a pseudo-random function of information received from the TLS client at least including the client random number R_{C}. The server random number R_{S} is communicated to the TLS client as part of the TLS Handshake Protocol ServerHello message which further typically contains the session identifier, the selected ciphering algorithm and the selected compression algorithm, herewith enabling the TLS client to verify whether the server random number R_{S} was indeed generated using the first pseudo-random function. As opposed to traditional TLS, the server random number R_{S} hence becomes deterministic this way enabling the TLS server to inform the TLS client that the TLS server supports the specific mode wherein a unique persistent node identity will be generated. Next, the TLS server calculates the public Diffie-Hellman value Y from a generator value g, the server secret value X and a prime value through Y = g^{X} mod p. The generator value g of the Diffie-Hellman group and the prime value p are selected by the TLS server or they may have been selected by the client and communicated to the server, for instance in the extension fields of the above mentioned TLS ClientHello message. The public server Diffie-Hellman value Y is transferred to the TLS client as part of the TLS ServerKeyExchange message or Certificate message. Also the used generator value g and prime value p are communicated to the TLS client. The client verifies whether the received public server Diffie-Hellman value Y is obtained through the second pseudo-random function to assess whether the server supports the specific mode and then generates a client mined value W. This client mined value W is picked completely randomly or may be the result of a third pseudo-random function of an additional variable v that is mined. The client mined value W is used in the generation of a client secret value Xc through a fourth pseudo-random function, which in turn results in the calculation of a public client Diffie-Hellman value Yc = g^{Xc} mod p. At the client side, a secret key value K is calculated from the received server Diffie-Hellman value Y and the client secret value Xc as K = Y^{Xc} mod p. The client mined value W or the variable v can be mined by attempting several random values such that the secret key value K satisfies the difficulty condition D imposed by the difficulty controller. As soon as this is the case, a unique persistent node identity has been generated and the public client Diffie-Hellman value Y_{C} is transferred in encrypted form to the TLS server as part of the TLS ClientKeyExchange message to enable the server to calculate the same shared secret key value K. The public client Diffie-Hellman value Yc is encrypted with the public key PK from the server's public key certificate. This way, an impersonator of the server will not be able to steal the unique persistent node identity from the client. At the server side, the shared secret key value K is calculated as K = Y_{C}^{X} mod p. At the client side, the generated unique persistent identity is stored, comprising the generator value g, the prime value p, the client random value R_{C}, the client mined value W or the additional random variable v. Each client and each server to which it is presented can verify if the client's unique persistent node identity satisfies the difficulty condition D. The unique persistent node identity hence can be used to authenticate with and obtain services from the initial server, but also from any subsequent server, even if the subsequent server is not interconnected with or even not aware of the existence of the initial server that was involved in the process of generating the unique persistent node identity. It is noticed that an intermediate eavesdropper of the communication between client and server cannot determine K = Y^{Xc} mod p because R_{C} X_{C} is determined from Wand W is non-deterministic: it is not computable from the information contained in the TLS handshake messages. Such intermediate eavesdropper also cannot determine K = Y_{C}^{X} mod p since Yc is transmitted in encrypted form. Further, the above described process to generate a shared secret key value K is entirely based on TLS messages and consequently is compatible with the majority of today's internet traffic.

Embodiments of the invention defined by claim 3, disclose a TLS based method to generate and use a unique persistent node identity for identifying and authenticating a client in a telecommunication network, further comprising:
- the client selecting in addition to the client random number R_{C} also the generator value g of the Diffie-Hellman group and the prime value p for the Diffie-Hellman algorithm;
- the client transferring to the server as part of the TLS ClientHello message also the generator value g and the prime value p resulting in the server obtaining the generator value g and the prime value p; and.
- the server generating the server random number R_{S} through the first pseudo-random function of at least the client random number R_{C}, the generator value g and the prime value p.

Thus, the generator value g of the Diffie-Hellman group and the prime value p may be selected by the client and transferred by the client to the server embedded in extension fields of the TLS ClientHello message. The server recognizing g and p in the extension fields may then use this additional information g, p received from the client as additional input parameters for the first pseudo-random function that generates the server random number R_{S}.

Embodiments of the invention defined by claim 4, disclose a TLS based method to generate and use a unique persistent node identity for identifying and authenticating a client in a telecommunication network, wherein:
- the client transfers to the server as part of the TLS ClientHello message also a protocol version and/or a list of supported ciphering algorithms and/or a list of supported compression algorithms;
- the server generates the server random number R_{S} through the first pseudo-random function of at least the client random number R_{C} and the protocol version and/or a selected ciphering algorithm out of the list of supported ciphering algorithms and/or a selected compression algorithm out of the list of supported compression algorithms.

Indeed, optionally, the TLS ClientHello message may convey protocol version information in the standard ProtocolVersion field. In case such protocol version information is present in the TLS ClientHello message, the server may use this information as an additional input parameter for the first pseudo-random function that generates the server random number R_{S}. Further input parameters for this first pseudo-random function are, as mentioned here above, the client random number R_{C} and optionally also the generator value g and prime value p when they are received from the client.

Also the selected ciphering algorithm, i.e. one of the algorithms out of the list of supported ciphering algorithms conveyed in the CipherSuites field of the TLS ClientHello message, and/or the selected compression algorithm, i.e. one of the algorithms out of the list of supported compression algorithms conveyed in the CompressionMethods field of the TLS ClientHello message, may be used as additional input parameter(s) for the first pseudo-random function that generates the server random number R_{S}. Further input parameters for this first pseudo-random function are, as mentioned here above, the client random number R_{C} and optionally also the generator value g, the prime value p and protocol version information when they are received from the client.

Embodiments of the invention defined by claim 5, disclose a TLS based method to generate and use a unique persistent node identity for identifying and authenticating a client in a telecommunication network, wherein:
- the client stores the protocol version and/or the selected ciphering algorithm and/or the selected compression algorithm in addition to the generator value g, the prime value p, the client random number R_{C} and the client mined value W or the additional random variable v to jointly form the unique persistent node identity.

Indeed, in case the protocol version information is used by the server to generate the server random number R_{S}, this protocol version information must be stored as part of the unique persistent node identity. Similarly, in case the selected ciphering algorithm and/or the selected compression algorithm is/are used by the server to generate the server random number R_{S}, this selected ciphering algorithm and/or the selected compression algorithm must be stored as part of the unique persistent node identity.

Embodiments of the invention defined by claim 6, disclose a TLS based method to generate and use a unique persistent node identity for identifying and authenticating a client in a telecommunication network, wherein the client generates the client secret value Xc through the fourth pseudo-random function of at least the client mined value W and the server Diffie-Hellman value Y, and furthermore one or more of:
- a time period identifier T representing a time period;
- a zone identifier Z representing a zone, i.e. a group of networks, a network or a part of a network; and
- a node type identifier G representing a group of nodes,
and wherein the client stores the time period identifier T and/or the zone identifier Z and/or the node type identifier G in addition to the generator value g, the prime value p, the client random number Rc, and the client mined value W or the additional random variable v, and possibly the protocol version and/or the selected ciphering algorithm and/or the selected compression algorithm to jointly form a restricted unique persistent node identity.

Thus, environmental variables may restrict the validity of the unique persistent node identity. In case the environmental variables comprise a time period identifier T, the use of the node identity can be restricted to a particular time period. In case the environmental variables comprise a zone identifier Z, the use of the node identity can be restricted to a particular zone, e.g. a group of networks like all mobile 3GPP networks in South-Korea, a single network like the mobile 3GPP network of a single mobile network operator in South-Korea, or even a portion of a network. In case the environmental variables comprise a node type identifier G, the use of the node identity can be restricted to a particular type of nodes, e.g. a particular group of endpoints sharing similar characteristics like for instance cars, refrigerators, flowerpots, etc. Obviously, a combination of environmental parameters as input for the pseudo-random functions enables to refine the restrictions imposed on the use of the node identity, e.g. to South-Korean refrigerators for a time span of 6 months. In any of those cases, the environmental variables T, Z, and/or G must be stored together with the generator value g, the prime value p, the client random number Rc, the client mined value W or additional random variable v, and optionally the protocol version information, the selected ciphering algorithm and/or the selected compression algorithm to jointly form the unique persistent node identity with restricted use.

Embodiments of the invention defined by claim 7, disclose a TLS based method to generate and use a unique persistent node identity for identifying and authenticating a client in a telecommunication network, further comprising:
- the server verifying if the shared secret key value K or the client Diffie-Hellman value Yc satisfies the difficulty condition D in order to decide whether to communicate with the client or which information to send to the client.

Indeed, also the server shall verify if the difficulty condition D is satisfied by the shared secret key K, or alternatively by the client Diffie-Hellman value Y_{C}, to establish trust in the client, and thereupon decide whether to communicate with the client and what information to share with the client.

Embodiments of the invention defined by claim 8, disclose a TLS based method to generate and use a unique persistent node identity for identifying and authenticating a client in a telecommunication network, further comprising:
- a subsequent server obtaining the difficulty condition D from the difficulty controller;
- the client retrieving the unique persistent node identity or the restricted unique persistent node identity from storage;
- the client transferring to the subsequent server a TLS ClientHello message comprising said client random number R_{C};
- the subsequent server generating the server random number R_{S} through the first pseudo-random function of at least the client random number R_{C};
- the subsequent server transferring to the client a TLS ServerHello message comprising the server random number R_{S};
- the client verifying if the server random number R_{S} is resulting from the first pseudo-random function;
- the subsequent server generating the server secret value X through the second pseudo-random function of at least the server random number R_{S};
- the subsequent server obtaining a generator value g of the Diffie-Hellman group and a prime value p for the Diffie-Hellman algorithm;
- the subsequent server calculating the server Diffie-Hellman value Y for the generator value g, the server secret value X and the prime value p;
- the subsequent server transferring to the client a TLS ServerKeyExchange message comprising the server Diffie-Hellman value Y, the generator value g and the prime value p;
- the client verifying if the server Diffie-Hellman value Y is resulting from the second pseudo-random function, and if so:
- the client retrieving the client mined value W from memory or storage or generating the client mined value W through the third pseudo-random function of the additional random variable v mined or retrieved from memory or storage;
- the client generating the client secret value X_{C} through the fourth pseudo-random function of at least the second client mined value W and the server Diffie-Hellman value Y;
- the client calculating the client Diffie-Hellman value Y_{C} for the generator value g, the client secret value X_{C} and the prime value p;
- the client calculating the shared secret key value K from the server Diffie-Hellman value Y, the client secret value X_{C} and the prime value p;
- the client transferring to the subsequent server a TLS ClientKeyExchange message comprising the client Diffie-Hellman value Y_{C} in encrypted form by encrypting the client Diffie-Hellman value Yc with the public key PK from the subsequent server's public key certificate; and
- the subsequent server calculating the same shared secret key value K from the client Diffie-Hellman value Yc, the server secret value X and the prime value p.

Thus, the unique persistent node identity or its restricted variant may be used to identify and authenticate with a subsequent server which possibly does not have access to the same authentication server, and which is not interconnected with or even not aware of the existence of the initial server that was involved in the process to generate the (restricted) unique persistent node identity. The subsequent server upfront receives the difficulty condition D from the difficulty controller. The client retrieves the unique persistent node identity or its restricted variant from memory or storage: the generator value g, prime value p, the client random number Rc, the client mined value W or additional random variable v, possibly the protocol version, possibly the selected ciphering algorithm and/or the selected compression algorithm, and possibly the environment variables, i.e. the time period identifier T, the zone identifier Z and the node type identifier G. The client thereupon sends to the subsequent server a TLS ClientHello message at least comprising the retrieved client random number Rc, a list of supported ciphering algorithms and a list of supported compression algorithms, but optionally also comprising in extension fields the generator value g and the prime value p. The subsequent server uses the first pseudo-random function to generate the server random number R_{S} from the information received from the client, i.e. the client random number Rc but possibly also the protocol version information contained in the TLS ClientHello message, the generator value g, the prime value p, and additional information that forms part of the reused (restricted) unique persistent node identity like a selected ciphering algorithm, a selected compression algorithm, and environmental variables T, Z and/or G. The generated server random number Rs is sent back from the subsequent server to the client as part of the TLS ServerHello message, wherein the subsequent server further embeds the selected ciphering algorithm and the selected compression algorithm. Upon receipt of the TLS ServerHello message, the client verifies if the received server random number Rs is indeed generated through the first pseudo-random function to assess whether the subsequent server supports the specific mode wherein a unique persistent node identity is generated in line with the present invention. The subsequent server continues the process by generating the server secret value X through applying the second pseudo-random function on the server random number R_{S}, and by generating the corresponding public Diffie-Hellman value Y = g^{X} mod p that is communicated by the subsequent server to the client as part of a TLS ServerKeyExchange message. This ServerKeyExchange message also contains the generator value g and prime value p used in the calculation of the public Diffie-Hellman value Y. Upon receipt of the TLS ServerKeyExchange message, the client verifies if the public server Diffie-Hellman value Y results from applying the second pseudo-random function to assess whether the subsequent server supports the specific mode. If this is indeed the case, the client will retrieve the client mined value W from memory or storage or calculate it through the third pseudo-random function of the additional random variable v, retrieved from memory or from storage. This client mined value W is used to generate a secret client number X_{C} through the fourth pseudo-random function that has as inputs the client mined value W, the server public Diffie-Hellman value Y, and optionally the environment variables T, Z and/or G. From the client secret value X_{C}, the corresponding Diffie-Hellman value Y_{C} = g^{Xc} mod p is calculated and the shared key value K is calculated as K = Y^{Xc} mod p. The shared key value K or the client Diffie-Hellman value Y_{C} satisfies the difficulty condition D. The public client Diffie-Hellman value Y_{C} is transferred in encrypted form to the subsequent server as part of a TLS ClientKeyExchange message to enable the subsequent server to also calculate the key value K = Y_{C}^{X} mod p. The same key value K will be found by the client and subsequent server ensuring that the subsequent server will also be able to transmit and/or receive data to/from the client.

Embodiments of the invention defined by claim 9, disclose a TLS based method to generate and use a unique persistent node identity for identifying and authenticating a client in a telecommunication network, further comprising:
- the client selecting a new client random value W or calculating the new client random value W' through the third pseudo-random function of a new random variable V';
- the client generating a renewed client secret value X_{C}' through the fourth pseudo-random function of at least the new client random value W and the server Diffie-Hellman value Y;
- the client calculating a renewed client Diffie-Hellman value Yc' for the generator value g, the renewed client secret value X_{C}' and the prime value p;
- the client calculating a renewed shared secret key value K' from the server Diffie-Hellman value Y, the renewed client secret value X_{C}' and the prime value p;
- the client verifying if the renewed shared secret key value K' or the renewed client Diffie-Hellman value Y_{C}' satisfies the difficulty condition D or a more stringent difficulty condition D' obtained from the difficulty controller, and if so:
- the client (1) transferring to the subsequent server a TLS ClientKeyExchange message comprising the renewed client Diffie-Hellman value Y_{C}' in encrypted form, either by encrypting the renewed client Diffie-Hellman value Y_{C}' with the public key PK from the subsequent server's public key certificate, or with the shared secret key value K, whereas the entire ClientKeyExchange message may be encrypted using the shared secret key value K if the shared secret key value K is transported over the TLS Record Layer; and
- the subsequent server calculating the same renewed shared secret key value K' from the renewed client Diffie-Hellman value Y_{C}', the server secret value X and the prime value p; and
- the subsequent server verifying if the renewed shared secret key value K' or the renewed client Diffie-Hellman value Y_{C}' satisfies the difficulty condition D or the more stringent difficulty condition D' in order to decide whether to communicate with the client or which information to send to the client.

Indeed, the client may use the opportunity that it is connected to a subsequent server to renew W and v' in order to mine for a renewed client Diffie-Hellman value Y_{C}' and renewed shared secret key value K' satisfying the difficulty condition D or a more stringent difficulty condition D' that is upfront obtained by the client. Also the subsequent server shall verify if the difficulty condition D or more stringent difficulty condition D', again upfront obtained by the subsequent server from the difficulty controller, is satisfied by the renewed shared secret key value K', or alternatively by the renewed client Diffie-Hellman value Y_{C}', to establish trust in the client, and thereupon decide whether to communicate with the client and what information to share with the client.

Embodiments of the invention defined by claim 10, disclose a TLS based method to generate and use a unique persistent node identity for identifying and authenticating a client in a telecommunication network, further comprising:
- the client generating a renewed client random number R_{C}' and transferring to the server or subsequent server a TLS ClientHello message comprising the renewed client random number R_{C}';
- the server or subsequent server generating a renewed server random number Rs' through the first pseudo-random function of at least the renewed client random number R_{C}';
- the server or subsequent server transferring to the client a TLS ServerHello message comprising the renewed server random number R_{S}';
- the client verifying if the renewed server random number R_{S}' is resulting from the first pseudo-random function;
- the server or subsequent server generating a renewed server secret value X' through the second pseudo-random function of at least the renewed server random number R_{S}';
- the server or subsequent server reusing the generator value g of the Diffie-Hellman group and the prime value p for the Diffie-Hellman algorithm;
- the server or subsequent server calculating a renewed server Diffie-Hellman value Y' for the generator value g, the renewed server secret value X' and the prime value p;
- the server or subsequent server transferring to the client a TLS ServerKeyExchange message comprising the renewed server Diffie-Hellman value Y', the generator value g and the prime value p;
- the client verifying if the renewed server Diffie-Hellman value Y' is resulting from the second pseudo-random function, and if so:
- the client generating a renewed client mined value W as a random value or through the third pseudo-random function of a renewed additional random variable v' mined or retrieved from memory or storage, or the client reusing the client mined value W or the additional random variable v;
- the client generating a renewed client secret value X_{C}' through the fourth pseudo-random function of at least the client mined value W or the renewed client mined value W, and the renewed server Diffie-Hellman value Y';
- the client calculating a renewed client Diffie-Hellman value Y_{C}' for the generator value g, the renewed client secret value X_{C}' and the prime value p;
- the client calculating a renewed shared secret key value K' from the renewed server Diffie-Hellman value Y', the renewed client secret value Xc' and the prime value p;
- the client verifying if the renewed shared secret key value K' or the renewed client Diffie-Hellman value Y_{C}' satisfies the difficulty condition D or the more stringent difficulty condition D', and if so:
   - the client storing the generator value g, the prime value p, the renewed client random number R_{C}' and the client mined value W or the renewed client mined value W to jointly form a renewed unique persistent node identity;
   - the client transferring to the server or subsequent server a TLS ClientKeyExchange message comprising the renewed client Diffie-Hellman value Y_{C}' in encrypted form, either by encrypting the renewed client Diffie-Hellman value Y_{C}' with the public key PK from the server's or the subsequent server's certificate, or with the shared secret key value K, whereas the entire CientKeyExchange message may be encrypted using the shared secret key value K if the shared secret key K is transported over the TLS Record Layer; and
   - the server or subsequent server calculating the same renewed shared secret key value K' from the renewed client Diffie-Hellman value Y_{C}', the renewed server secret value X' and the prime value p.

Indeed, each TLS renegotiation is an opportunity for the client to discover a renewed client Diffie-Hellman value Y_{C}' and renewed shared secret key value K' which may satisfy the difficulty condition D or a more stringent difficulty condition D'. When such values Y_{C}' and K' are found, a subsequent unique persistent node identity is stored.

Embodiments of the invention defined by claim 11, disclose a TLS based method to generate and use a unique persistent node identity for identifying and authenticating a client in a telecommunication network, further comprising:
- the client generating an attempted client mined value W" as a random value or through the third pseudo-random function of an attempted additional random variable v" mined or retrieved from memory or storage;
- the client calculating an attempted client secret value Xc" through the fourth pseudo-random function of at least said attempted client mined value W" and the server Diffie-Hellman value Y;
- the client calculating an attempted client Diffie-Hellman value Y_{C}" for the generator value g, the attempted client secret value X_{C}" and the prime value p;
- the client calculating an attempted shared secret key value K" from the server Diffie-Hellman value Y, the attempted client secret value X_{C}" and the prime value p;
- the client verifying if the attempted shared secret key value K" or the attempted client Diffie-Hellman value Y_{C}" satisfies the difficulty condition D or a more stringent difficulty condition D" obtained from the difficulty controller (7), and if so:
- the client storing the generator value g, the prime value p, the client random number R_{C} and the attempted client mined value W" or attempted additional random variable v" to jointly form a subsequent unique persistent node identity;
- the client transferring to the server or subsequent server a TLS ClientHello message comprising the client random number R_{C};
- the server or subsequent server generating the server random number R_{S} through the first pseudo-random function of at least the client random number R_{C};
- the server or subsequent server transferring to the client a TLS ServerHello message comprising the server random number R_{S};
- the client verifying if the renewed server random number Rs is resulting from the first pseudo-random function;
- the server or subsequent server generating the server secret value X through the second pseudo-random function of at least the server random number R_{S};
- the server or subsequent server reusing the generator value g of the Diffie-Hellman group and the prime value p for the Diffie-Hellman algorithm;
- the server or subsequent server calculating the server Diffie-Hellman value Y for the generator value g, the server secret value X and the prime value p;
- the server or subsequent server transferring to the client a TLS ServerKeyExchange message comprising the server Diffie-Hellman value Y, the generator value g and the prime value p;
- the client verifying if the server Diffie-Hellman value Y is resulting from the second pseudo-random function, and if so:
- the client transferring to the server or subsequent server a TLS ClientKeyExchange message comprising the attempted client Diffie-Hellman value Y_{C}" in encrypted form, either by encrypting the attempted client Diffie-Hellman value Y_{C}" with the public key PK from the server's or the subsequent server's certificate, or with the shared secret key value K or the renewed shared secret key value K', whereas the entire TLS ClientKeyExchange message may be encrypted using the shared secret key value K or the renewed shared secret key value K' if the shared secret key value K or the renewed shared secret key value K' is transported over the TLS Record Layer; and
- the server or subsequent server calculating the same attempted shared secret key value K" from the attempted client Diffie-Hellman value Y_{C}", the server secret value X and the prime value p.

Indeed, the client can continuously mine for W" or v" in order to discover a renewed client Diffie-Hellman value, the so called attempted client Diffie-Hellman value Y_{C}" and renewed shared secret key value, the so called attempted shared secret key value K" which may satisfy the difficulty condition D or a more stringent difficulty condition D'. When such value W" or v" is found a subsequent unique persistent node identity is stored.

Embodiments of the invention defined by claim 12, disclose a TLS based method to generate and use a unique persistent node identity for identifying and authenticating a client in a telecommunication network, further comprising:
- the server or subsequent server transmitting to the client a TLS Certificate message comprising the server Diffie-Hellman value Y, the renewed server Diffie-Hellman value Y' and/or the server public key PK in the server public key certificate.

Indeed, the server Diffie-Hellman value Y may also be transmitted in a TLS Certificate message rather than in the TLS ServerKeyExchange message. The TLS Certificate also conveys the public key PK which may be used to encrypt the client Diffie- Hellman values Y_{C}, Y_{C}' or Y_{C}".

Embodiments of the invention defined by claim 13, disclose a TLS based method to generate and use a unique persistent node identity for identifying and authenticating a client in a telecommunication network, further comprising:
- an Elliptic Curve Diffie-Hellman key agreement protocol is used to establish the shared secret key value K, the renewed shared secret key value K' or the attempted shared secret key value K": and
- cryptographic parameters a and b are used instead of the generator value g of the Diffie-Hellman group and the prime value p for the Diffie-Hellman algorithm.

Indeed, Elliptic-Curve Diffie-Hellman and Elliptic-Curve Diffie-Hellman Ephemeral key agreement protocols may be used rather than traditional Diffie-Hellman key agreement protocol using exponentiation functions.

In addition to a method as defined by claim 1, an embodiment of the invention concerns a client as defined by claim 13 and a server as defined by claim 14.

### Brief Description of the Drawings

Fig. 1 illustrates an amended TLS session generating a unique persistent node identity or restricted unique persistent node identity according to an embodiment of the present invention;
Fig. 2 illustrates an amended TLS session reusing a unique persistent node identity or restricted unique persistent node identity with a subsequent server according to an embodiment of the present invention;
Fig. 3 illustrates an amended TLS session enabling a client to negotiate a renewed shared secret key K' with a subsequent server it is connected to according to an embodiment of the present invention;
Fig. 4 illustrates an amended TLS session enabling a client-triggered or server-triggered full renegotiation of a renewed unique persistent node identity or renewed restricted unique persistent node identity with a server according to an embodiment of the present invention;
Fig. 5 illustrates an amended TLS session enabling a client-triggered or server-triggered full renegotiation of a renewed unique persistent node identity or renewed restricted unique persistent node identity with a subsequent server according to an embodiment of the present invention;
Fig. 6 illustrates an amended TLS session enabling a client to mine for and use an attempted unique persistent node identity or attempted restricted unique persistent node identity with a server according to an embodiment of the present invention;
Fig. 7 illustrates an amended TLS session enabling a client to mine for and use an attempted unique persistent node identity or attempted restricted unique persistent node identity with a subsequent server according to an embodiment of the present invention; and
Fig. 8 illustrates a computing system suitable for hosting the client or server according to the present invention and suitable for implementing the method for generating and using a unique persistent node identity according to the present invention.

### Detailed Description of Embodiment(s)

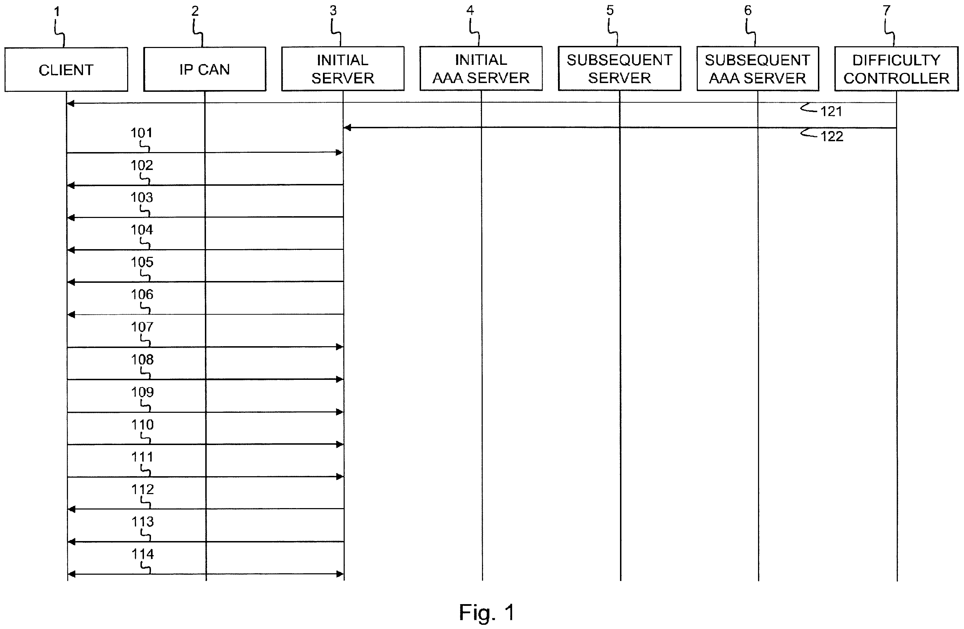

Fig. 1 shows the amended sequence of Transport Layer Security (TLS) messages that implements the generation of a unique persistent node identity or restricted unique persistent node identity according to an embodiment of the invention. The sequence requires minor adaptations to existing TLS messages and consequently can be implemented readily for granting access to services that nowadays rely on TLS as specified in IETF RFC 5246, like for instance secure access to websites.

Fig. 1 depicts the different entities that play a role in establishing secure connections over a wired or wireless Internet Protocol Connectivity Access Network 2. The client 1 can be any node, for instance an endpoint like a user device, object or sensor, but also an intermediate node like a gateway, switch or router, desiring to authenticate in order to get access to certain services. IP CAN 2 represents an IP Connectivity Access Network, i.e. a wireline or wireless Internet Protocol based communication network, like for instance a wireless local area network (WLAN). The server 3 is the authenticator of the secure connection. The Initial AAA server 4 is the Authentication, Authorization and Accounting server that generates the billing information for the initial secure connection. Fig. 1 further shows a subsequent server 5 that authenticates a subsequent secure connection initiated by the client 1. The subsequent AAA server 6 is the Authentication, Authorization and Accounting server that generates the billing information for this subsequent secure connection. At last, the difficulty controller 7 represents a central server or unit that manages and distributes the difficulty condition D that impose a calculation effort to generate a unique persistent identity or restricted unique persistent identity for the client 1.

The establishment of a secure connection typically consists of Layer 2 or L2 attachment between the client 1 and the IP CAN 2, e.g. via the IEEE 802.11 protocol, authentication and authorization between the client 1 and the IP CAN 2, e.g. via the EAPOL protocol, allocation of the IP address and other parameters between the client 1 and IP CAN 2, e.g. via the DHCP protocol, establishment and closure of the initial secure connection between the client 1 and initial server 3, wherein the initial server 3 consults the initial AAA server 4 for SIM based, certificate based or username/password based authentication, and establishment of a subsequent secure connection between the client 1 and subsequent server 5, wherein the subsequent server 5 consults the subsequent AAA server 6 for SIM based, certificate based or username/password based authentication. Fig. 1 shows the sequence of messages for the establishment and closure of the initial secure connection between the client 1 and initial server 3 in an embodiment of the invention that relies on TLS like messages.

Prior to the TLS Handshake Protocol, the client 1 and initial server 3 receive a difficulty condition D from the difficulty controller 7. This is indicated by arrows 121 and 122 in Fig. 1. The difficulty condition D imposes a calculation effort on the client 1 and initial server 3 in order to successfully generate a valid unique persistent node identity. The difficulty condition D may for instance specify that the generated shared key value K must be numerically inferior to a certain number, e.g. the shared key value must have a certain length and a certain minimum number of leading zeros.

The TLS Handshake Protocol thereupon starts with the transmission of a TLS ClientHello message 101 from the client 1 to the server 3. This TLS ClientHello message 101 contains a protocol version, a client random number Rc, a session identifier, a list of ciphering algorithms supported by the client 1, a list of compression methods supported by the client 1, and optional extension fields. The client random number Rc is randomly generated number by the client 1. The client 1 further also may generate a generator value g of the Diffie-Hellman group and a prime value p for the Diffie-Hellman algorithm and embed these values g and p in extension fields of the TLS ClientHello message 101. The information received from the client 1 as part of the TLS ClientHello message 101 is used by the server 3 to generate a server random number Rs through a first pseudo-random function. The server 3 further selects one of the supported ciphering algorithms and selects one of the supported compression methods. The first pseudo-random function that generates the server random number Rs has as inputs the client random number Rc but possibly also additional information contained in the TLS ClientHello message 101 like the protocol version, the selected ciphering algorithm, the selected compression method, and/or the generator value g and prime value p if present in the extension fields. The server 3 thereupon replies to the TLS ClientHello message 101 with a TLS ServerHello message 102. This TLS ServerHello message 102 contains the server random number Rs, the session identification copied from the TLS ClientHello message 101, the selected ciphering algorithm and the selected compression method. As opposed to traditional TLS Handshaking, the server random number R_{S} contained in the TLS ServerHello message 102 is fully deterministic enabling the client 1 to verify upon receipt of the TLS ServerHello message 102 if the therein contained server random number Rs results from the first pseudo-random function applied to the information sent to the server 3 as part of the TLS ClientHello message 101. This way, the client 1 assesses whether the server 3 supports the specific mode wherein a unique persistent node identity is generated in line with the present invention. Optionally, the server 3 sends a Certificate message 103 containing its own certificate or even a list of certificates. The server 3 further generates a secret server value X as a second pseudo-random function of the random server number Rs and calculates the corresponding public server Diffie-Hellman value Y through the formula Y = g^{X} mod p. In case the TLS ClientHello message 101 does not contain a generator value g and prime value p in its extension fields, the server 3 must select a generator value g of the Diffie-Hellman group and prime value p in order to be able to calculate the public server Diffie-Hellman value Y. The server 3 thereupon sends a TLS ServerKeyExchange message 104 to the client 1. This TLS ServerKeyExchange message 104 contains the public server Diffie-Hellman value Y, the generator value g and prime value p used in the Diffie-Hellman algorithm. Alternatively, the public server Diffie-Hellman value Y may be transferred to the client 1 as part of the Certificate message 103. The client 1 can assess whether the server 3 supports the specific mode wherein a unique persistent node identity is generated in line with the present invention by verifying if the public server Diffie-Hellman value Y results from applying the second pseudo-random function. Optionally, the server 3 thereupon sends a TLS CertificateRequest message 105 to request the client's certificate, and thereupon terminates the TLS Handshake Protocol with a TLS ServerHelloDone message 106. The client 1 optionally sends its certificate in a TLS Certificate message 107, as well as a verification of its certificate in a TLS CertificateVerify message 108. The client 1 may further propose an alternate ciphering algorithm via a TLS ChangeCipherSpec message 109. In addition, the client 1 generates a client mined value W. This client mined value W may be generated entirely random or the client 1 may apply a third pseudo-random function using as input an additional variable v to generate the client mined value W. The additional variable v and/or the client mined value W will be mined such that the shared key value K that is calculated later in the process satisfies the difficulty condition D. The client mined value W as well as the received public server Diffie-Hellman value Y serve as input parameters for a fourth pseudo-random function that is used by the client 1 to generate a client secret value X_{C}. Optionally, this fourth pseudo-random function has environmental parameters as additional inputs, such that a client secret value Xc and consequently also unique persistent node identity is generated with restricted validity. The validity may for instance be restricted in time in case the environmental parameters comprise a time period identifier T. The validity also may be restricted to particular geographical zone(s), network(s) or network portion(s) if the environmental parameters comprise a zone identifier Z. The validity also may be restricted to particular type(s) of nodes in case the environmental parameters comprise a node type identifier G. The client secret value X_{C} is used by the client to calculate the corresponding public client Diffie-Hellman value Y_{C} via the formula Y_{C} = g^{Xc} mod p. Using the received server Diffie-Hellman value Y and the secret client value X_{C}, the client 1 can now calculate a shared key value K which the initial server 3 also can obtain without having to share the shared secret value K and consequently without exposing the shared secret key value K to eavesdroppers. The client 1 thereto applies the formula K = Y^{Xc} mod p. If the so generated shared secret key value K satisfies the difficulty condition D, a valid unique persistent node identity has been generated and client 1 can store this unique persistent node identity for further usage. The unique persistent node identity consists of the generator value g, the prime value p, the random client value R_{C} and the client mined value W, but optionally also may comprise the protocol version, the selected ciphering algorithm and/or the selected compression method whichever of these parameters has been used in the first pseudo-random function to generate the server random number R_{S}. In case of a restricted unique persistent node identity, the latter identity also comprises the environmental parameters T, Z and/or G used by the fourth pseudo-random function to generate the client secret number X_{C}. In order to authenticate with the initial server 3, the client 1 sends a TLS ClientKeyExchange message 110 to the server 3. This TLS ClientKeyExchange message 110 contains the public client Diffie-Hellman value Yc in encrypted form by encrypting the client Diffie-Hellman value Yc with the public key PK from the server's public key certificate. The encryption provides protection against an impersonated server stealing the unique persistent node identity. Upon receipt of the TLS ClientKeyExchange message 110, the server 3 computes the same shared key value K from the received public client Diffie-Hellman value Y_{C} and the server secret number X through the formula K = Y_{C}^{X} mod p. The server 3 can now verify if the generated shared secret key value K satisfies the difficulty condition D, and if this is the case, decides to communicate with the client 1 and what information to send to the client 1. In the TLS Finished message 111, the client 1 sends the result of a pseudo-random function applied to all previously sent messages. This way it is made possible to verify integrity of all data and to avoid that a malicious third party has injected messages in the session. The server 3 optionally can propose a change in the selected ciphering algorithm via TLS ChangeCipherSpec message 112, and the server 3 also sends the result of a pseudo-random function applied to all previously sent messages in a TLS Finished message 113 to enable the client 1 to verify data integrity. Thereafter, the TLS Record Protocol 114 is initiated between client 1 and server 3.

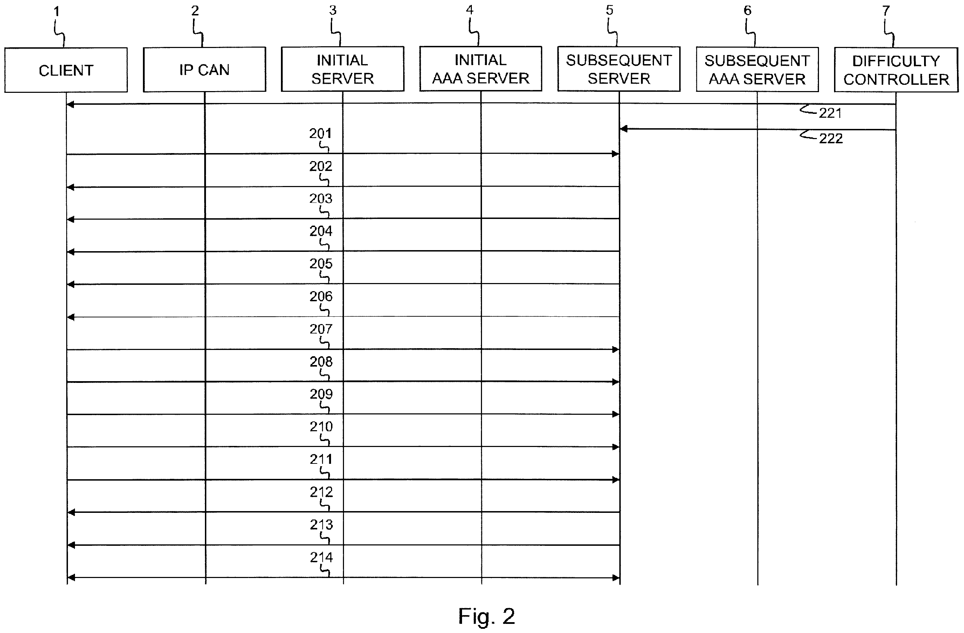

Fig. 2 shows the sequence of messages transferred when the client 1 is reusing its unique persistent node identity to authenticate with subsequent server 5. Upfront, the difficulty controller 7 has informed the client 1 on the difficulty condition D. Message 221 consequently may be identical to message 121, specifying for instance a difficulty level that must be satisfied by the shared secret key value K. Also the subsequent server 5 is informed on the difficulty condition D. Via message 222, the difficulty controller 7 informs the subsequent server 5 for instance on the difficulty level that must be satisfied by the shared secret key value K. The client 1 retrieves the unique persistent identity from storage. In other words, the client 1 retrieves the generator value g, prime value p, client random value R_{C} and client mined value W or additional random variable v from storage. In the case where additional information forms part of the unique persistent node identity, the client 1 also retrieves the protocol version and/or the selected ciphering algorithm and/or the selected compression algorithm from storage. In the case where a restricted unique persistent node identity was stored, the client 1 also retrieves the corresponding environment parameters T and/or Z and/or G from storage.

The TLS Handshake Protocol thereupon starts with the transmission of a TLS ClientHello message 201 from the client 1 to the subsequent server 5. This TLS ClientHello message 201 contains a protocol version, the client random number Rc retrieved from storage, a session identifier, a list of ciphering algorithms supported by the client 1, a list of compression methods supported by the client 1, and optional extension fields. The generator value g of the Diffie-Hellman group and the prime value p for the Diffie-Hellman algorithm retrieved from storage and additional information that forms part of the unique persistent node identity retrieved from storage may be embedded in the extension fields of the TLS ClientHello message 201. The information received from the client 1 as part of the TLS ClientHello message 201 is used by the subsequent server 5 to generate the same server random number Rs through the first pseudo-random function. The subsequent server 5 further selects one of the supported ciphering algorithms and selects one of the supported compression methods. The first pseudo-random function that generates the server random number Rs has as inputs the client random number R_{C} as found in the TLS ClientHello message 201 but possibly also additional information contained in the TLS ClientHello message 201 like the protocol version, the selected ciphering algorithm, the selected compression method, and/or the generator value g and prime value p, retrieved by the client 1 from storage and presented to the subsequent server 5 via the extension fields of the TLS ClientHello message 201. The subsequent server 5 thereupon replies to the TLS ClientHello message 201 with a TLS ServerHello message 202. This TLS ServerHello message 202 contains the server random number Rs, the session identification copied from the TLS ClientHello message 201, the selected ciphering algorithm and the selected compression method. Upon receipt of the TLS ServerHello message 202, the client 1 verifies if the therein contained server random number Rs results from the first pseudo-random function applied to the information sent to the subsequent server 5 as part of the TLS ClientHello message 201. This way, the client 1 assesses whether the subsequent server 5 supports the specific mode wherein a unique persistent node identity is generated in line with the present invention. Optionally, the subsequent server 5 sends a Certificate message 203 containing its own certificate or even a list of certificates. The subsequent server 5 further generates the same secret server value X via the second pseudo-random function applied to the random server number Rs and calculates the corresponding public server Diffie-Hellman value Y through the formula Y = g^{X} mod p. In case the TLS ClientHello message 201 does not contain a generator value g and prime value p in its extension fields, the subsequent server 5 must select a generator value g of the Diffie-Hellman group and prime value p in order to be able to calculate the public server Diffie-Hellman value Y. The subsequent server 5 thereupon sends a TLS ServerKeyExchange message 204 to the client 1. This TLS ServerKeyExchange message 204 contains the public server Diffie-Hellman value Y, the generator value g and prime value p used in the Diffie-Hellman algorithm. Alternatively, the public server Diffie-Hellman value Y may be transferred to the client 1 as part of the Certificate message 203. The client 1 can assess whether the subsequent server 5 supports the specific mode wherein a unique persistent node identity is generated in line with the present invention by verifying if the public server Diffie-Hellman value Y results from applying the second pseudo-random function. Optionally, the subsequent server 5 thereupon sends a TLS CertificateRequest message 205 to request the client's certificate, and thereupon terminates the TLS Handshake Protocol with a TLS ServerHelloDone message 206. The client 1 optionally sends its certificate in a TLS Certificate message 207, as well as a verification of its certificate in a TLS CertificateVerify message 208. The client 1 may further propose an alternate ciphering algorithm via a TLS ChangeCipherSpec message 209. In addition, the client 1 retrieves the client mined value W from memory or storage or calculates it through the third pseudo-random function of the additional random variable v retrieved from memory or storage. The client mined value Was well as the received public server Diffie-Hellman value Y serve as input parameters for a fourth pseudo-random function that is used by the client 1 to generate a client secret value X_{C}. Optionally, this fourth pseudo-random function also has environmental parameters as additional inputs, such that a client secret value X_{C} and consequently also unique persistent node identity is generated with restricted validity. The validity may for instance be restricted in time in case the environmental parameters comprise a time period identifier T. The validity also may be restricted to particular geographical zone(s), network(s) or network portion(s) if the environmental parameters comprise a zone identifier Z. The validity also may be restricted to particular type(s) of nodes in case the environmental parameters comprise a node type identifier G. The client secret value X_{C} is used by the client 1 to calculate the corresponding public client Diffie-Hellman value Y_{C} via the formula Y_{C} = g^{Xc} mod p. Using the received server Diffie-Hellman value Y and the secret client value X_{C}, the client 1 can now calculate the shared key value K which the subsequent server 5 also can obtain without having to share the shared secret key value K and consequently without exposing the shared secret key value K to eavesdroppers. The client 1 thereto applies the formula K = Y^{Xc} mod p. The so generated shared secret key value K satisfies the difficulty condition D. In order to authenticate with the subsequent server 5, the client 1 sends a TLS ClientKeyExchange message 210 to the subsequent server 5. This TLS ClientKeyExchange message 210 contains the public client Diffie-Hellman value Yc in encrypted form by encrypting the client Diffie-Hellman value Y_{C} with the public key PK from the subsequent server's public key certificate. Upon receipt of the TLS ClientKeyExchange message 210, the subsequent server 5 computes the same shared key value K from the received public client Diffie-Hellman value Yc and the server secret number X through the formula K = Y_{C}^{X} mod p. The subsequent server 5 can now verify if the generated subsequent shared secret key value K satisfies the difficulty condition D, and if this is the case, decides to communicate with the client 1 and what information to send to the client 1. In the TLS Finished message 211, the client 1 sends the result of a pseudo-random function applied to all previously sent messages. This way it is made possible to verify integrity of all data and to avoid that a malicious third party has injected messages in the session. The subsequent server 5 optionally can propose a change in the selected ciphering algorithm via TLS ChangeCipherSpec message 212, and the subsequent server 5 also sends the result of a pseudo-random function applied to all previously sent messages in a TLS Finished message 213 to enable the client 1 to verify data integrity. Thereafter, the TLS Record Protocol 214 is initiated between client 1 and subsequent server 5.

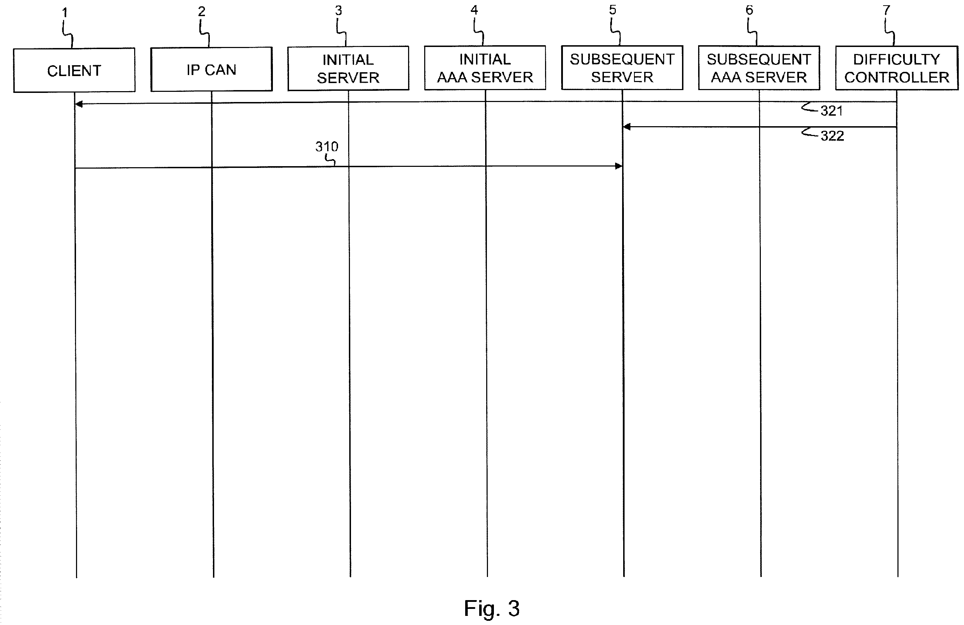

Fig 3 shows the sequence of messages involved in the rekeying process, enabling the client 1 to negotiate a renewed shared secret key K' with the subsequent server 5. Indeed, the client 1 may use the opportunity that it is connected to a subsequent server 5 to renew W' and v' in order to mine for a renewed client Diffie-Hellman value Y_{C}' and renewed shared secret key value K' satisfying the difficulty condition D or a more stringent difficulty condition D' that is upfront obtained by the client 1. Also the subsequent server 5 shall verify if the difficulty condition D or more stringent difficulty condition D', again upfront obtained by the subsequent server 5 from the difficulty controller, is satisfied by the renewed shared secret key value K', or alternatively by the renewed client Diffie-Hellman value Y_{C}', to establish trust in the client 1, and thereupon decide whether to communicate with the client and what information to share with the client.

The client hence selects a new client random value W or calculates such new client random value W through the third pseudo-random function of a new random variable v'. The client 1 generates a renewed client secret value X_{C}' through the fourth pseudo-random function of at least the new client random value W' and the server Diffie-Hellman value Y. The client 1 thereupon calculates a renewed client Diffie-Hellman value Y_{C}' for the generator value g, the renewed client secret value X_{C}' and the prime value p, and the client 1 calculates a renewed shared secret key value K' from the server Diffie-Hellman value Y, the renewed client secret value X_{C}' and the prime value p. Thereupon, the client 1 verifies if the renewed shared secret key value K' or the renewed client Diffie-Hellman value Y_{C}' satisfies the difficulty condition D or the more stringent difficulty condition D' obtained from the difficulty controller (7) as is indicated by arrows 321 and 322 in Fig. 3. If the difficulty condition D or more stringent difficulty condition D' is satisfied, the client 1 transfers to the subsequent server 5 a TLS ClientKeyExchange message 310 comprising the renewed client Diffie-Hellman value Y_{C}' in encrypted form, either by encrypting the renewed client Diffie-Hellman value Y_{C}' with the public key PK from the subsequent server's public key certificate, or with the shared secret key value K. The entire ClientKeyExchange message 310 may be encrypted using the shared secret key value K if this shared secret key value K is transported over the TLS Record Layer. The subsequent server 5 calculates the same renewed shared secret key value K' from the renewed client Diffie-Hellman value Y_{C}', the server secret value X and the prime value p, and verifies if the renewed shared secret key value K' or the renewed client Diffie-Hellman value Y_{C}' satisfies the difficulty condition D or said more stringent difficulty condition D' in order to decide whether to communicate with the client 1 or which information to send to the client 1.

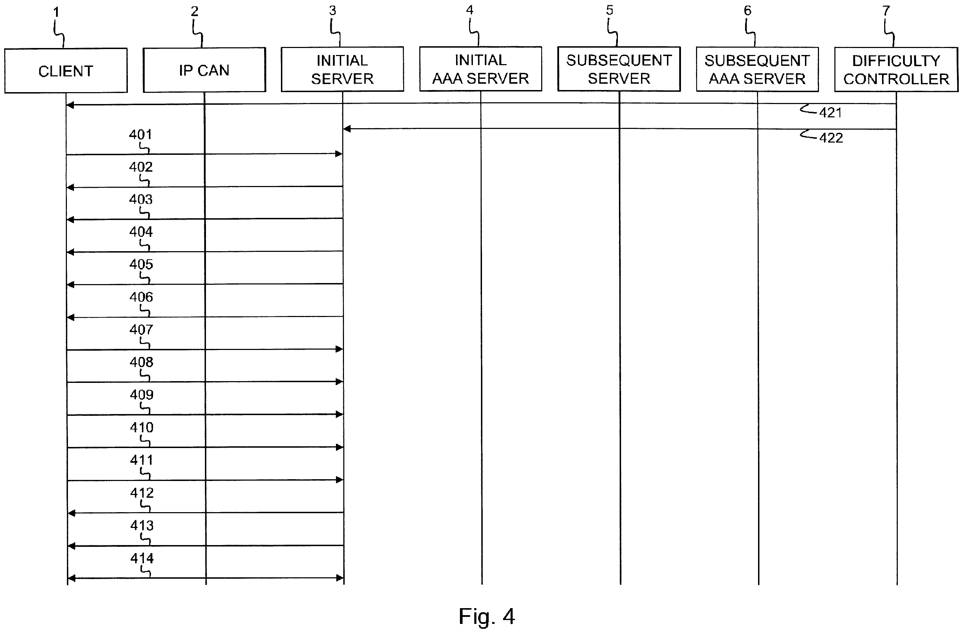

Fig. 4 shows the sequence of messages for a client triggered full renegotiation of the unique persistent node identity in an embodiment of the invention that relies on TLS like messages. It is noticed that a server triggered full renegotiation of the unique persistent node identity is also covered through Fig. 4 as the procedure would be identical except for the server 3 sending a TLS HelloRequest message to the client 1 preceding the TLS ClientHello message 401. Such TLS renegotiation is an opportunity for the client 1 to discover a renewed client Diffie-Hellman value Y_{C}' and renewed shared secret key value K' which may satisfy the difficulty condition D or a more stringent difficulty condition D'. When such values Y_{C}' and K' are found, a subsequent unique persistent node identity is stored which may enable access to continued enhanced services from the server 3.

Prior to the TLS Handshake Protocol, the client 1 and initial server 3 receive the difficulty condition D or a more stringent difficulty condition D' from the difficulty controller 7. This is indicated by arrows 421 and 422 in Fig. 4. The difficulty condition D or more stringent difficulty condition D' imposes a calculation effort on the client 1 and initial server 3 in order to successfully generate a renewed valid unique persistent node identity. The difficulty condition D or more stringent difficulty condition D' may for instance specify that the generated renewed shared key value K' must be numerically inferior to a certain number, e.g. the renewed shared key value K' must have a certain length and a certain minimum number of leading zeros.

The TLS Handshake Protocol thereupon starts with the transmission of a TLS ClientHello message 401 from the client 1 to the server 3. This TLS ClientHello message 401 contains a protocol version, a renewed client random number Rc', a session identifier, a list of ciphering algorithms supported by the client 1, a list of compression methods supported by the client 1, and optional extension fields. The renewed client random number Rc' is randomly generated number by the client 1. The information received from the client 1 as part of the TLS ClientHello message 401 is used by the server 3 to generate a renewed server random number Rs' through a first pseudo-random function. The server 3 further selects one of the supported ciphering algorithms and selects one of the supported compression methods. The first pseudo-random function that generates the renewed server random number Rs' has as inputs the renewed client random number R_{C}' but possibly also additional information contained in the TLS ClientHello message 401 like the protocol version, the selected ciphering algorithm, the selected compression method, and/or the generator value g and prime value p which may be reused by the server 3. The server 3 thereupon replies to the TLS ClientHello message 401 with a TLS ServerHello message 402. This TLS ServerHello message 402 contains the renewed server random number R_{S}', the session identification copied from the TLS ClientHello message 401, the selected ciphering algorithm and the selected compression method. As opposed to traditional TLS Handshaking, the renewed server random number R_{S}' contained in the TLS ServerHello message 402 is fully deterministic enabling the client 1 to verify upon receipt of the TLS ServerHello message 402 if the therein contained renewed server random number R_{S}' results from the first pseudo-random function applied to the information sent to the server 3 as part of the TLS ClientHello message 401. This way, the client 1 assesses whether the server 3 supports the specific mode wherein a unique persistent node identity is generated in line with the present invention. Optionally, the server 3 sends a Certificate message 403 containing its own certificate or even a list of certificates. The server 3 further generates a renewed secret server value X' as a second pseudo-random function of the renewed random server number R_{S}' and calculates the corresponding renewed public server Diffie-Hellman value Y' through the formula Y' = g^{X'} mod p. The server 3 thereto reuses the generator value g of the Diffie-Hellman group and prime value p. The server 3 thereupon sends a TLS ServerKeyExchange message 404 to the client 1. This TLS ServerKeyExchange message 404 contains the renewed public server Diffie-Hellman value Y', the generator value g and prime value p used in the Diffie-Hellman algorithm. Alternatively, the renewed public server Diffie-Hellman value Y' may be transferred to the client 1 as part of the Certificate message 403. The client 1 can assess whether the server 3 supports the specific mode wherein a unique persistent node identity is generated in line with the present invention by verifying if the renewed public server Diffie-Hellman value Y' results from applying the second pseudo-random function. Optionally, the server 3 thereupon sends a TLS CertificateRequest message 405 to request the client's certificate, and thereupon terminates the TLS Handshake Protocol with a TLS ServerHelloDone message 406. The client 1 optionally sends its certificate in a TLS Certificate message 407, as well as a verification of its certificate in a TLS CertificateVerify message 408. The client 1 may further propose an alternate ciphering algorithm via a TLS ChangeCipherSpec message 409. In addition, the client 1 generates a renewed client mined value W. This renewed client mined value W may be generated entirely random or the client 1 may apply the third pseudo-random function using as input a renewed additional variable v' to generate the renewed client mined value W. Alternatively, the client 1 may reuse the client mined value W or additional random variable v. The renewed additional variable v' and/or the renewed client mined value W will be mined such that the renewed shared key value K' that is calculated later in the process satisfies the difficulty condition D or more stringent difficulty condition D'. The renewed client mined value W or client mined value W as well as the received renewed public server Diffie-Hellman value Y' serve as input parameters for the fourth pseudo-random function that is used by the client 1 to generate a renewed client secret value Xc'. Optionally, this fourth pseudo-random function has environmental parameters as additional inputs, such that a renewed client secret value X_{C}' and consequently also renewed unique persistent node identity is generated with restricted validity. The validity may for instance be restricted in time in case the environmental parameters comprise a time period identifier T. The validity also may be restricted to particular geographical zone(s), network(s) or network portion(s) if the environmental parameters comprise a zone identifier Z. The validity also may be restricted to particular type(s) of nodes in case the environmental parameters comprise a node type identifier G. The renewed client secret value X_{C}' is used by the client to calculate the corresponding renewed public client Diffie-Hellman value Yc' via the formula Y_{C}' = g^{Xc'} mod p. Using the received renewed server Diffie-Hellman value Y' and the renewed secret client value X_{C}', the client 1 can now calculate a renewed shared key value K' which the initial server 3 also can obtain without having to share the renewed shared secret value K' and consequently without exposing the renewed shared secret key value K' to eavesdroppers. The client 1 thereto applies the formula K' = Y'^{Xc'} mod p. If the so generated renewed shared secret key value K' satisfies the difficulty condition D or more stringent difficulty condition D', a valid renewed unique persistent node identity has been generated and client 1 can store this renewed unique persistent node identity for further usage. The renewed unique persistent node identity consists of the generator value g, the prime value p, the renewed random client value R_{C}' and the client mined value W or renewed client mined value W (or the respective additional random variables v or v' where they can be calculated from), but optionally also may comprise the protocol version, the selected ciphering algorithm and/or the selected compression method whichever of these parameters has been used in the first pseudo-random function to generate the renewed server random number Rs'. In case of a restricted renewed unique persistent node identity, the latter identity also comprises the environmental parameters T, Z and/or G used by the fourth pseudo-random function to generate the renewed client secret number X_{C}'. In order to authenticate with the initial server 3, the client 1 sends a TLS ClientKeyExchange message 410 to the server 3. This TLS ClientKeyExchange message 410 contains the renewed public client Diffie-Hellman value Yc' in encrypted form by encrypting the renewed client Diffie-Hellman value Y_{C}' with the public key PK from the server's public key certificate. The encryption provides protection against an impersonated server stealing the renewed unique persistent node identity. Upon receipt of the TLS ClientKeyExchange message 410, the server 3 computes the same renewed shared key value K' from the received renewed public client Diffie-Hellman value Y_{C}' and the renewed server secret number X' through the formula K' = Y_{C}'^{X'} mod p. The server 3 can now verify if the generated renewed shared secret key value K' satisfies the difficulty condition D or more stringent difficulty condition D', and if this is the case, decides what continued or additional services to enable for the client 1. In the TLS Finished message 411, the client 1 sends the result of a pseudo-random function applied to all previously sent messages. This way it is made possible to verify integrity of all data and to avoid that a malicious third party has injected messages in the session. The server 3 optionally can propose a change in the selected ciphering algorithm via TLS ChangeCipherSpec message 412, and the server 3 also sends the result of a pseudo-random function applied to all previously sent messages in a TLS Finished message 413 to enable the client 1 to verify data integrity. Thereafter, the TLS Record Protocol 414 is initiated between client 1 and server 3.

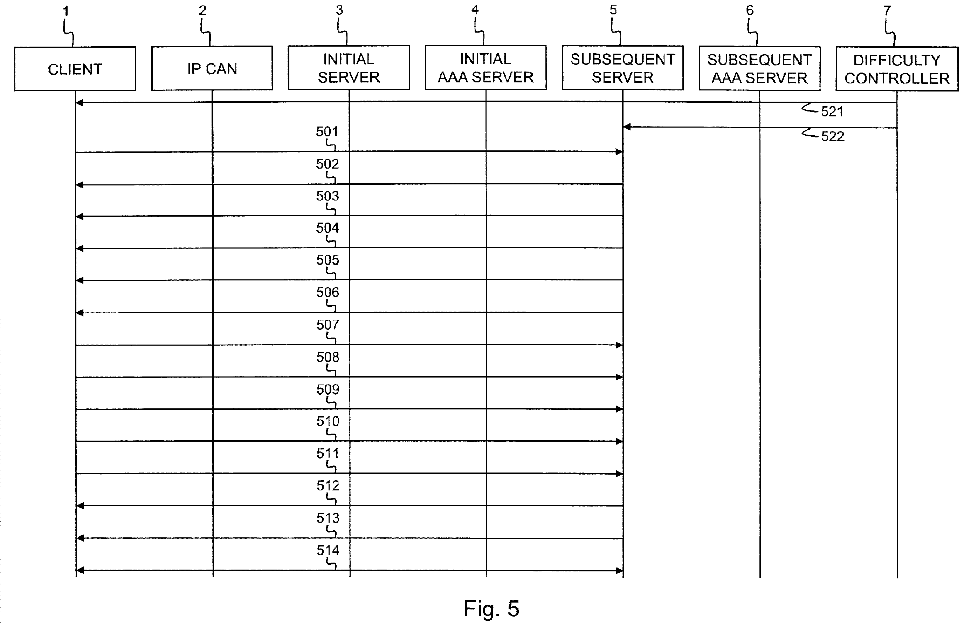

Fig. 5 shows a similar sequence of messages for a client triggered full renegotiation of the unique persistent node identity with the subsequent server 5 in an embodiment of the invention that relies on TLS like messages. It is noticed that a subsequent server triggered full renegotiation of the unique persistent node identity is also covered through Fig. 5 as the procedure would be identical except for the subsequent server 3 sending a TLS HelloRequest message to the client 1 preceding the TLS ClientHello message 501. Such TLS renegotiation is an opportunity for the client 1 to discover a renewed client Diffie-Hellman value Y_{C}' and renewed shared secret key value K' which may satisfy the difficulty condition D or a more stringent difficulty condition D'. When such values Y_{C}' and K' are found, a subsequent unique persistent node identity is stored which may enable access to continued or enhanced services from the subsequent server 5.

Prior to the TLS Handshake Protocol, the client 1 and initial subsequent server 5 receive the difficulty condition D or a more stringent difficulty condition D' from the difficulty controller 7. This is indicated by arrows 521 and 522 in Fig. 5. The difficulty condition D or more stringent difficulty condition D' imposes a calculation effort on the client 1 and subsequent server 5 in order to successfully generate a renewed valid unique persistent node identity. The difficulty condition D or more stringent difficulty condition D' may for instance specify that the generated renewed shared key value K' must be numerically inferior to a certain number, e.g. the renewed shared key value K' must have a certain length and a certain minimum number of leading zeros.

The TLS Handshake Protocol thereupon starts with the transmission of a TLS ClientHello message 501 from the client 1 to the subsequent server 5. This TLS ClientHello message 501 contains a protocol version, a renewed client random number Rc', a session identifier, a list of ciphering algorithms supported by the client 1, a list of compression methods supported by the client 1, and optional extension fields. The renewed client random number Rc' is randomly generated number by the client 1. The information received from the client 1 as part of the TLS ClientHello message 501 is used by the subsequent server 5 to generate a renewed server random number Rs' through a first pseudo-random function. The subsequent server 5 further selects one of the supported ciphering algorithms and selects one of the supported compression methods. The first pseudo-random function that generates the renewed server random number Rs' has as inputs the renewed client random number R_{C}' but possibly also additional information contained in the TLS ClientHello message 501 like the protocol version, the selected ciphering algorithm, the selected compression method, and/or the generator value g and prime value p which may be reused by the subsequent server 5. The subsequent server 5 thereupon replies to the TLS ClientHello message 501 with a TLS ServerHello message 502. This TLS ServerHello message 502 contains the renewed server random number R_{S}', the session identification copied from the TLS ClientHello message 501, the selected ciphering algorithm and the selected compression method. As opposed to traditional TLS Handshaking, the renewed server random number Rs' contained in the TLS ServerHello message 502 is fully deterministic enabling the client 1 to verify upon receipt of the TLS ServerHello message 502 if the therein contained renewed server random number R_{S}' results from the first pseudo-random function applied to the information sent to the subsequent server 5 as part of the TLS ClientHello message 501. This way, the client 1 assesses whether the subsequent server 5 supports the specific mode wherein a unique persistent node identity is generated in line with the present invention. Optionally, the subsequent server 5 sends a Certificate message 403 containing its own certificate or even a list of certificates. The subsequent server 5 further generates a renewed secret server value X' as a second pseudo-random function of the renewed random server number R_{S}' and calculates the corresponding renewed public server Diffie-Hellman value Y' through the formula Y' = g^{X'} mod p. The subsequent server 5 thereto reuses the generator value g of the Diffie-Hellman group and prime value p. The subsequent server 5 thereupon sends a TLS ServerKeyExchange message 504 to the client 1. This TLS ServerKeyExchange message 504 contains the renewed public server Diffie-Hellman value Y', the generator value g and prime value p used in the Diffie-Hellman algorithm. Alternatively, the renewed public server Diffie-Hellman value Y' may be transferred to the client 1 as part of the Certificate message 503. The client 1 can assess whether the subsequent server 5 supports the specific mode wherein a unique persistent node identity is generated in line with the present invention by verifying if the renewed public server Diffie-Hellman value Y' results from applying the second pseudo-random function. Optionally, the subsequent server 5 thereupon sends a TLS CertificateRequest message 505 to request the client's certificate, and thereupon terminates the TLS Handshake Protocol with a TLS ServerHelloDone message 506.

The client 1 optionally sends its certificate in a TLS Certificate message 507, as well as a verification of its certificate in a TLS CertificateVerify message 508. The client 1 may further propose an alternate ciphering algorithm via a TLS ChangeCipherSpec message 509. In addition, the client 1 generates a renewed client mined value W. This renewed client mined value W may be generated entirely random or the client 1 may apply the third pseudo-random function using as input a renewed additional variable v' to generate the renewed client mined value W. Alternatively, the client 1 may reuse the client mined value W or additional random variable v. The renewed additional variable v' and/or the renewed client mined value W will be mined such that the renewed shared key value K' that is calculated later in the process satisfies the difficulty condition D or more stringent difficulty condition D'. The renewed client mined value W or client mined value W as well as the received renewed public server Diffie-Hellman value Y' serve as input parameters for the fourth pseudo-random function that is used by the client 1 to generate a renewed client secret value X_{C}'. Optionally, this fourth pseudo-random function has environmental parameters as additional inputs, such that a renewed client secret value X_{C}' and consequently also renewed unique persistent node identity is generated with restricted validity. The validity may for instance be restricted in time in case the environmental parameters comprise a time period identifier T. The validity also may be restricted to particular geographical zone(s), network(s) or network portion(s) if the environmental parameters comprise a zone identifier Z. The validity also may be restricted to particular type(s) of nodes in case the environmental parameters comprise a node type identifier G. The renewed client secret value X_{C}' is used by the client to calculate the corresponding renewed public client Diffie-Hellman value Y_{C}' via the formula Y_{C}' = g^{Xc'} mod p. Using the received renewed server Diffie-Hellman value Y' and the renewed secret client value X_{C}', the client 1 can now calculate a renewed shared key value K' which the subsequent server 5 also can obtain without having to share the renewed shared secret value K' and consequently without exposing the renewed shared secret key value K' to eavesdroppers. The client 1 thereto applies the formula K' = Y'^{Xc'} mod p. If the so generated renewed shared secret key value K' satisfies the difficulty condition D or more stringent difficulty condition D', a valid renewed unique persistent node identity has been generated and client 1 can store this renewed unique persistent node identity for further usage. The renewed unique persistent node identity consists of the generator value g, the prime value p, the renewed random client value R_{C}' and the client mined value W or renewed client mined value W (or the respective additional random variables v or v' where they can be calculated from), but optionally also may comprise the protocol version, the selected ciphering algorithm and/or the selected compression method whichever of these parameters has been used in the first pseudo-random function to generate the renewed server random number R_{S}'. In case of a restricted renewed unique persistent node identity, the latter identity also comprises the environmental parameters T, Z and/or G used by the fourth pseudo-random function to generate the renewed client secret number X_{C}'. In order to authenticate with the subsequent server 5, the client 1 sends a TLS ClientKeyExchange message 510 to the subsequent server 5. This TLS ClientKeyExchange message 510 contains the renewed public client Diffie-Hellman value Y_{C}' in encrypted form by encrypting the renewed client Diffie-Hellman value Y_{C}' with the public key PK from the subsequent server's public key certificate. The encryption provides protection against an impersonated server stealing the renewed unique persistent node identity. Upon receipt of the TLS ClientKeyExchange message 510, the subsequent server 5 computes the same renewed shared key value K' from the received renewed public client Diffie-Hellman value Y_{C}' and the renewed server secret number X' through the formula K' = Y_{C}'^{X'} mod p. The subsequent server 5 can now verify if the generated renewed shared secret key value K' satisfies the difficulty condition D or more stringent difficulty condition D', and if this is the case, decides what continued or additional services to enable for the client 1. In the TLS Finished message 511, the client 1 sends the result of a pseudo-random function applied to all previously sent messages. This way it is made possible to verify integrity of all data and to avoid that a malicious third party has injected messages in the session. The subsequent server 5 optionally can propose a change in the selected ciphering algorithm via TLS ChangeCipherSpec message 512, and the subsequent server 5 also sends the result of a pseudo-random function applied to all previously sent messages in a TLS Finished message 513 to enable the client 1 to verify data integrity. Thereafter, the TLS Record Protocol 514 is initiated between client 1 and subsequent server 5.

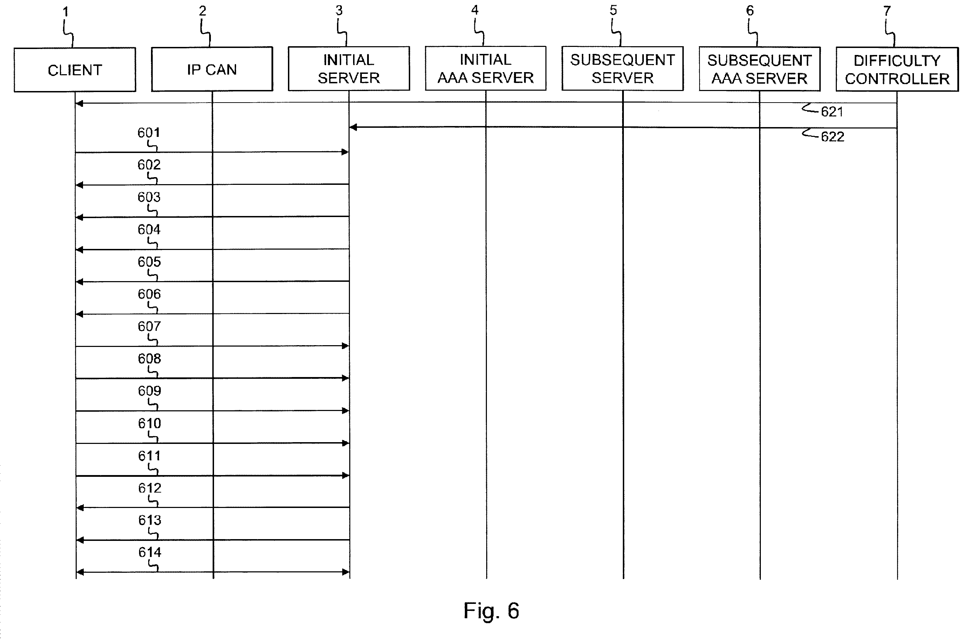

Fig. 6 shows the sequence of messages for renegotiating the TLS connection between client 1 and server 3 when the client continuously mines for an improved or so called attempted client mined value W" used to calculate an improved or so called attempted shared secret key value K". Indeed, the client 1 can continuously mine for W" or v" in order to calculate a renewed client secret value, the so called attempted client secret value X_{C}", and to discover a renewed client Diffie-Hellman value, the so called attempted client Diffie-Hellman value Y_{C}" and renewed shared secret key value, the so called attempted shared secret key value K" which may satisfy the difficulty condition D or a more stringent difficulty condition D". In this process, the generator value g, prime value p, client random number R_{C}, server Diffie-Hellman value Y, the third pseudo-random function and the fourth pseudo-random function are reused. The attempted client mined value W" as well as the reused public server Diffie-Hellman value Y serve as input parameters for the fourth pseudo-random function that is used by the client 1 to generate an attempted client secret value X_{C}". Optionally, this fourth pseudo-random function has environmental parameters as additional inputs, such that the attempted client secret value X_{C}" and consequently also the subsequent unique persistent node identity is generated with restricted validity. The validity may for instance be restricted in time in case the environmental parameters comprise a time period identifier T. The validity also may be restricted to particular geographical zone(s), network(s) or network portion(s) if the environmental parameters comprise a zone identifier Z. The validity also may be restricted to particular type(s) of nodes in case the environmental parameters comprise a node type identifier G. The attempted client secret value X_{C}" is used by the client to calculate the corresponding attempted public client Diffie-Hellman value Y_{C}" via the formula Y_{C}" = g^{Xc"} mod p. Reusing the server Diffie-Hellman value Y and using the attempted secret client value X_{C}", the client 1 calculates an attempted shared key value K" which the initial server 3 also can obtain without having to share the attempted shared secret value K" and consequently without exposing the attempted shared secret key value K" to eavesdroppers. The client 1 thereto applies the formula K" = Y^{Xc"} mod p. If the so generated attempted shared secret key value K" satisfies the difficulty condition D or more stringent difficulty condition D", a valid subsequent unique persistent node identity has been generated and client 1 can store this subsequent unique persistent node identity for further usage. The subsequent unique persistent node identity consists of the generator value g, the prime value p, the random client value R_{C} and the attempted client mined value W" or attempted random variable v", but optionally also may comprise the protocol version, the selected ciphering algorithm and/or the selected compression method whichever of these parameters has been used in the first pseudo-random function to generate the renewed server random number R_{S}. In case of a restricted subsequent unique persistent node identity, the latter identity also comprises the environmental parameters T, Z and/or G used by the fourth pseudo-random function to generate the attempted client secret number X_{C}".

Thereafter, the TLS connection is renegotiated. Prior to the TLS Handshake Protocol, the client 1 and initial server 3 receive the difficulty condition D or the more stringent difficulty condition D" from the difficulty controller 7. This is indicated by arrows 621 and 622 in Fig. 6. The difficulty condition D or more stringent difficulty condition D" imposes a calculation effort on the client 1 and initial server 3 in order to successfully generate a subsequent valid unique persistent node identity. The difficulty condition D or more stringent difficulty condition D" may for instance specify that the generated attempted shared key value K" must be numerically inferior to a certain number, e.g. the attempted shared key value K" must have a certain length and a certain minimum number of leading zeros.

The TLS Handshake Protocol thereupon starts with the transmission of a TLS ClientHello message 601 from the client 1 to the server 3. This TLS ClientHello message 601 contains a protocol version, the client random number R_{C}, a session identifier, a list of ciphering algorithms supported by the client 1, a list of compression methods supported by the client 1, and optional extension fields. The client random number R_{C} is reused and left unmodified. The information received from the client 1 as part of the TLS ClientHello message 601 is used by the server 3 to generate the server random number R_{S} through a first pseudo-random function. The server 3 further selects one of the supported ciphering algorithms and selects one of the supported compression methods. The first pseudo-random function that generates the server random number R_{S} has as inputs the client random number R_{C} but possibly also additional information contained in the TLS ClientHello message 601 like the protocol version, the selected ciphering algorithm, the selected compression method, and/or the generator value g and prime value p which may be reused by the server 3. The server 3 thereupon replies to the TLS ClientHello message 601 with a TLS ServerHello message 602. This TLS ServerHello message 602 contains the server random number Rs, the session identification copied from the TLS ClientHello message 601, the selected ciphering algorithm and the selected compression method. As opposed to traditional TLS Handshaking, the server random number R_{S} contained in the TLS ServerHello message 602 is fully deterministic enabling the client 1 to verify upon receipt of the TLS ServerHello message 602 if the therein contained server random number R_{S} results from the first pseudo-random function applied to the information sent to the server 3 as part of the TLS ClientHello message 601. This way, the client 1 assesses whether the server 3 supports the specific mode wherein a unique persistent node identity is generated in line with the present invention. Optionally, the server 3 sends a Certificate message 603 containing its own certificate or even a list of certificates. The server 3 further generates the secret server value X as the second pseudo-random function of the random server number R_{S} and calculates the corresponding public server Diffie-Hellman value Y through the formula Y = g^{X} mod p. The server 3 thereto reuses the generator value g of the Diffie-Hellman group and prime value p. The server 3 thereupon sends a TLS ServerKeyExchange message 604 to the client 1. This TLS ServerKeyExchange message 604 contains the public server Diffie-Hellman value Y, the generator value g and prime value p used in the Diffie-Hellman algorithm. Alternatively, the public server Diffie-Hellman value Y may be transferred to the client 1 as part of the Certificate message 603. The client 1 can assess whether the server 3 supports the specific mode wherein a unique persistent node identity is generated in line with the present invention by verifying if the public server Diffie-Hellman value Y results from applying the second pseudo-random function. Optionally, the server 3 thereupon sends a TLS CertificateRequest message 605 to request the client's certificate, and thereupon terminates the TLS Handshake Protocol with a TLS ServerHelloDone message 606. The client 1 optionally sends its certificate in a TLS Certificate message 607, as well as a verification of its certificate in a TLS CertificateVerify message 608. The client 1 may further propose an alternate ciphering algorithm via a TLS ChangeCipherSpec message 609. In order to authenticate with the initial server 3, the client 1 sends a TLS ClientKeyExchange message 610 to the server 3. This TLS ClientKeyExchange message 610 contains the attempted public client Diffie-Hellman value Yc" in encrypted form by encrypting the attempted client Diffie-Hellman value Y_{C}" with the public key PK from the server's public key certificate or with the shared secret key value K or with the renewed shared secret kay value K'. The entire TLS ClientKeyExchange message 610 may be encrypted using the shared secret key value K or the renewed shared secret key value K' if the shared secret key value K or the renewed shared secret key value K' is transported over the TLS Record Layer. The encryption provides protection against an impersonated server stealing the subsequent unique persistent node identity. Upon receipt of the TLS ClientKeyExchange message 610, the server 3 computes the same attempted shared key value K" from the received attempted public client Diffie-Hellman value Y_{C}" and the server secret number X through the formula K" = Y_{C}"^{X} mod p. The server 3 can now verify if the generated attempted shared secret key value K" satisfies the difficulty condition D or more stringent difficulty condition D", and if this is the case, decides what continued or additional services to enable for the client 1. In the TLS Finished message 611, the client 1 sends the result of a pseudo-random function applied to all previously sent messages. This way it is made possible to verify integrity of all data and to avoid that a malicious third party has injected messages in the session. The server 3 optionally can propose a change in the selected ciphering algorithm via TLS ChangeCipherSpec message 612, and the server 3 also sends the result of a pseudo-random function applied to all previously sent messages in a TLS Finished message 613 to enable the client 1 to verify data integrity. Thereafter, the TLS Record Protocol 614 is initiated between client 1 and server 3.

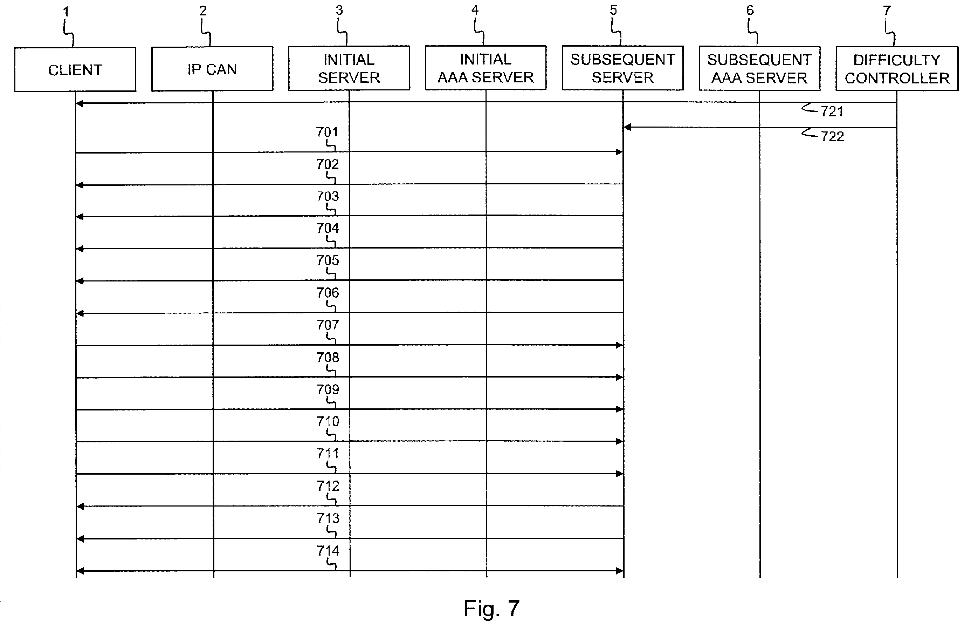

Fig. 7 shows a similar sequence of messages for renegotiating the TLS connection between client 1 and subsequent server 5 when the client continuously mines for an improved or so called attempted client mined value W" used to calculate an improved or so called attempted shared secret key value K". Indeed, the client 1 can continuously mine for W" or v" in order to calculate a renewed client secret value, the so called attempted client secret value X_{C}", and to discover a renewed client Diffie-Hellman value, the so called attempted client Diffie-Hellman value Y_{C}" and renewed shared secret key value, the so called attempted shared secret key value K" which may satisfy the difficulty condition D or a more stringent difficulty condition D". In this process, the generator value g, prime value p, client random number R_{C}, server Diffie-Hellman value Y, the third pseudo-random function and the fourth pseudo-random function are reused. The attempted client mined value W" as well as the reused public server Diffie-Hellman value Y serve as input parameters for the fourth pseudo-random function that is used by the client 1 to generate an attempted client secret value X_{C}". Optionally, this fourth pseudo-random function has environmental parameters as additional inputs, such that the attempted client secret value X_{C}" and consequently also the subsequent unique persistent node identity is generated with restricted validity. The validity may for instance be restricted in time in case the environmental parameters comprise a time period identifier T. The validity also may be restricted to particular geographical zone(s), network(s) or network portion(s) if the environmental parameters comprise a zone identifier Z. The validity also may be restricted to particular type(s) of nodes in case the environmental parameters comprise a node type identifier G. The attempted client secret value Xc" is used by the client to calculate the corresponding attempted public client Diffie-Hellman value Y_{C}" via the formula Y_{C}" = g^{Xc"} mod p. Reusing the server Diffie-Hellman value Y and using the attempted secret client value X_{C}", the client 1 calculates an attempted shared key value K" which the initial server 3 also can obtain without having to share the attempted shared secret value K" and consequently without exposing the attempted shared secret key value K" to eavesdroppers. The client 1 thereto applies the formula K" = Y^{Xc"} mod p. If the so generated attempted shared secret key value K" satisfies the difficulty condition D or more stringent difficulty condition D", a valid subsequent unique persistent node identity has been generated and client 1 can store this subsequent unique persistent node identity for further usage. The subsequent unique persistent node identity consists of the generator value g, the prime value p, the random client value R_{C} and the attempted client mined value W" or attempted random variable v", but optionally also may comprise the protocol version, the selected ciphering algorithm and/or the selected compression method whichever of these parameters has been used in the first pseudo-random function to generate the renewed server random number R_{S}. In case of a restricted subsequent unique persistent node identity, the latter identity also comprises the environmental parameters T, Z and/or G used by the fourth pseudo-random function to generate the attempted client secret number X_{C}".

Thereafter, the TLS connection between client 1 and subsequent server 5 is renegotiated. Prior to the TLS Handshake Protocol, the client 1 and subsequent server 5 receive the difficulty condition D or the more stringent difficulty condition D" from the difficulty controller 7. This is indicated by arrows 721 and 722 in Fig. 7. The difficulty condition D or more stringent difficulty condition D" imposes a calculation effort on the client 1 and subsequent server 5 in order to successfully generate a subsequent valid unique persistent node identity. The difficulty condition D or more stringent difficulty condition D" may for instance specify that the generated attempted shared key value K" must be numerically inferior to a certain number, e.g. the attempted shared key value K" must have a certain length and a certain minimum number of leading zeros.

The TLS Handshake Protocol thereupon starts with the transmission of a TLS ClientHello message 701 from the client 1 to the subsequent server 5. This TLS ClientHello message 701 contains a protocol version, the client random number R_{C}, a session identifier, a list of ciphering algorithms supported by the client 1, a list of compression methods supported by the client 1, and optional extension fields. The client random number R_{C} is reused and left unmodified. The information received from the client 1 as part of the TLS ClientHello message 701 is used by the subsequent server 5 to generate the server random number R_{S} through the first pseudo-random function. The subsequent server 5 further selects one of the supported ciphering algorithms and selects one of the supported compression methods. The first pseudo-random function that generates the server random number R_{S} has as inputs the client random number R_{C} but possibly also additional information contained in the TLS ClientHello message 701 like the protocol version, the selected ciphering algorithm, the selected compression method, and/or the generator value g and prime value p which may be reused by the subsequent server 5. The subsequent server 5 thereupon replies to the TLS ClientHello message 701 with a TLS ServerHello message 702. This TLS ServerHello message 702 contains the server random number R_{S}, the session identification copied from the TLS ClientHello message 701, the selected ciphering algorithm and the selected compression method. As opposed to traditional TLS Handshaking, the server random number R_{S} contained in the TLS ServerHello message 702 is fully deterministic enabling the client 1 to verify upon receipt of the TLS ServerHello message 702 if the therein contained server random number R_{S} results from the first pseudo-random function applied to the information sent to the subsequent server 5 as part of the TLS ClientHello message 701. This way, the client 1 assesses whether the subsequent server 5 supports the specific mode wherein a unique persistent node identity is generated in line with the present invention. Optionally, the subsequent server 5 sends a Certificate message 703 containing its own certificate or even a list of certificates. The subsequent server 5 further generates the secret server value X as the second pseudo-random function of the random server number R_{S} and calculates the corresponding public server Diffie-Hellman value Y through the formula Y = g^{X} mod p. The subsequent server 5 thereto reuses the generator value g of the Diffie-Hellman group and prime value p. The subsequent server 5 thereupon sends a TLS ServerKeyExchange message 704 to the client 1. This TLS ServerKeyExchange message 704 contains the public server Diffie-Hellman value Y, the generator value g and prime value p used in the Diffie-Hellman algorithm. Alternatively, the public server Diffie-Hellman value Y may be transferred to the client 1 as part of the Certificate message 703. The client 1 can assess whether the subsequent server 5 supports the specific mode wherein a unique persistent node identity is generated in line with the present invention by verifying if the public server Diffie-Hellman value Y results from applying the second pseudo-random function. Optionally, the subsequent server 5 thereupon sends a TLS CertificateRequest message 705 to request the client's certificate, and thereupon terminates the TLS Handshake Protocol with a TLS ServerHelloDone message 706. The client 1 optionally sends its certificate in a TLS Certificate message 707, as well as a verification of its certificate in a TLS CertificateVerify message 708. The client 1 may further propose an alternate ciphering algorithm via a TLS ChangeCipherSpec message 709. In order to authenticate with the subsequent server 5, the client 1 sends a TLS ClientKeyExchange message 710 to the server 5. This TLS ClientKeyExchange message 710 contains the attempted public client Diffie-Hellman value Yc" in encrypted form by encrypting the attempted client Diffie-Hellman value Yc" with the public key PK from the subsequent server's public key certificate or with the shared secret key value K or with the renewed shared secret kay value K'. The entire TLS ClientKeyExchange message 710 may be encrypted using the shared secret key value K or the renewed shared secret key value K' if the shared secret key value K or the renewed shared secret key value K' is transported over the TLS Record Layer. The encryption provides protection against an impersonated server stealing the subsequent unique persistent node identity. Upon receipt of the TLS ClientKeyExchange message 710, the subsequent server 5 computes the same attempted shared key value K" from the received attempted public client Diffie-Hellman value Y_{C}" and the server secret number X through the formula K" = Y_{C}"^{X} mod p. The subsequent server 5 can now verify if the generated attempted shared secret key value K" satisfies the difficulty condition D or more stringent difficulty condition D", and if this is the case, decides what continued or additional services to enable for the client 1. In the TLS Finished message 711, the client 1 sends the result of a pseudo-random function applied to all previously sent messages. This way it is made possible to verify integrity of all data and to avoid that a malicious third party has injected messages in the session. The subsequent server 5 optionally can propose a change in the selected ciphering algorithm via TLS ChangeCipherSpec message 712, and the subsequent server 5 also sends the result of a pseudo-random function applied to all previously sent messages in a TLS Finished message 713 to enable the client 1 to verify data integrity. Thereafter, the TLS Record Protocol 714 is initiated between client 1 and subsequent server 5.

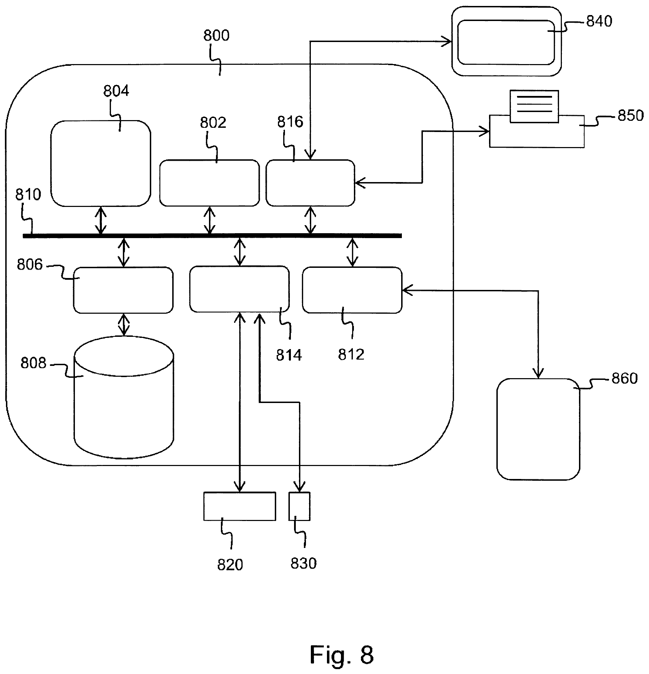

Fig. 8 shows a suitable computing system 300 for hosting the initiator or server according to the present invention and suitable for implementing the TLS based method for generating and using a unique persistent node identity according to the present invention, embodiments of which are drawn in Fig. 1 - Fig 7. Computing system 800 may in general be formed as a suitable general purpose computer and comprise a bus 810, a processor 802, a local memory 804, one or more optional input interfaces 814, one or more optional output interfaces 816, a communication interface 812, a storage element interface 806 and one or more storage elements 808. Bus 810 may comprise one or more conductors that permit communication among the components of the computing system. Processor 802 may include any type of conventional processor or microprocessor that interprets and executes programming instructions. Local memory 804 may include a random access memory (RAM) or another type of dynamic storage device that stores information and instructions for execution by processor 802 and/or a read only memory (ROM) or another type of static storage device that stores static information and instructions for use by processor 804. Input interface 814 may comprise one or more conventional mechanisms that permit an operator to input information to the computing device 800, such as a keyboard 820, a mouse 830, a pen, voice recognition and/or biometric mechanisms, etc. Output interface 816 may comprise one or more conventional mechanisms that output information to the operator, such as a display 840, a printer 850, a speaker, etc. Communication interface 812 may comprise any transceiver-like mechanism such as for example two 1Gb Ethernet interfaces that enables computing system 800 to communicate with other devices and/or systems, for example mechanisms for communicating with one or more other computing systems. The communication interface 812 of computing system 800 may be connected to such another computing system 860 by means of a local area network (LAN) or a wide area network (WAN), such as for example the internet, in which case the other computing system may for example comprise a suitable web server. Storage element interface 806 may comprise a storage interface such as for example a Serial Advanced Technology Attachment (SATA) interface or a Small Computer System Interface (SCSI) for connecting bus 810 to one or more storage elements 808, such as one or more local disks, for example 1 TB SATA disk drives, and control the reading and writing of data to and/or from these storage elements 808. Although the storage elements 808 above is described as a local disk, in general any other suitable computer-readable media such as a removable magnetic disk, optical storage media such as a CD or DVD, -ROM disk, solid state drives, flash memory cards, ... could be used.

The steps executed in the TLS based method for generating and using a unique persistent node identity according to the present invention, illustrated by the above embodiments, may be implemented as programming instructions stored in local memory 804 of the computing system 800 for execution by its processor 802. Alternatively the instructions may be stored on the storage element 808 or be accessible from another computing system through the communication interface 812.

Although the present invention has been illustrated by reference to specific embodiments, it will be apparent to those skilled in the art that the invention is not limited to the details of the foregoing illustrative embodiments. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order.

## Claims

1. A Transport Layer Security, abbreviated TLS, based method to generate and use a unique persistent node identity for identifying and authenticating a client (1) in a telecommunication network (2), said method comprising establishing a secure TLS connection between said client (1) and a server (3) and generating at said client (1) and said server (3) a shared secret key value K through a computational algorithm with a difficulty condition D obtained from a difficulty controller (7) and limiting the number of valid node identities, said method comprising:
- said client (1) and said server (3) obtaining said difficulty condition D from said difficulty controller (7);
- said client (1) generating a client random number R_{C};
- said client (1) transferring to said server (3) a TLS ClientHello message (101) comprising said client random number R_{C};
- said server (3) generating a server random number R_{S} through a first pseudo-random function of at least said client random number R_{C};
- said server (3) transferring to said client (1) a TLS ServerHello message (102) comprising said server random number R_{S};
- said client (1) verifying if said server random number R_{S} is resulting from said first pseudo-random function;
- said server (3) generating a server secret value X through a second pseudo-random function of at least said server random number R_{S};
- said server (3) obtaining a generator value g of the Diffie-Hellman group and a prime value p for the Diffie-Hellman algorithm;
- said server (3) calculating a server Diffie-Hellman value Y for said generator value g, said server secret value X and said prime value p;
- said server (3) transferring to said client (1) a TLS Certificate message (103) or a TLS ServerKeyExchange (104) comprising said server Diffie-Hellman value Y, said generator value g and said prime value p;
- said client (1) verifying if said server Diffie-Hellman value Y is resulting from said second pseudo-random function through the same steps as said server (3) for calculation of Y using said first pseudo-random function, said second pseudo-random function, said client random number Rc, said generator value g and said prime value p, and if so:
- said client (1) generating a client mined value Was a random value or through a third pseudo-random function of an additional random variable v mined or retrieved from memory or storage;
- said client (1) generating a client secret value X_{C} through a fourth pseudo-random function of at least said client mined value W and said server Diffie-Hellman value Y;
- said client (1) calculating a client Diffie-Hellman value Y_{C} for said generator value g, said client secret value Xc and said prime value p;
- said client (1) calculating said shared secret key value K from said server Diffie-Hellman value Y, said client secret value Xc and said prime value p;
- said client (1) verifying if said shared secret key value K or said client Diffie-Hellman value Yc satisfies said difficulty condition D, and if so:
- said client (1) storing said generator value g, said prime value p, said client random number R_{C} and said client mined value W or said additional random variable v to jointly form said unique persistent node identity;
- said client (1) transferring to said server (3) a TLS ClientKeyExchange message (110) comprising said client Diffie-Hellman value Yc in encrypted form, by encrypting said client Diffie-Hellman value Yc with the public key PK from said server's public key certificate; and
- said server (3) calculating said same shared secret key value K from said client Diffie-Hellman value Yc, said server secret value X and said prime value p.

2. The method according to claim 2. 1, further comprising:
- said client (1) selecting in addition to said client random number Rc also said generator value g of the Diffie-Hellman group and said prime value p for the Diffie-Hellman algorithm;
- said client (1) transferring to said server (3) as part of said TLS ClientHello message (101) also said generator value g and said prime value p resulting in said server (3) obtaining said generator value g and said prime value p; and.
- said server (3) generating said server random number Rₛ through said first pseudo-random function of at least said client random number R_{c}, said generator value g and said prime value p.

3. The method according to claim 2, wherein:
- said client (1) transfers to said server (3) as part of said TLS ClientHello message (101) also a protocol version and/or a list of supported ciphering algorithms and/or a list of supported compression algorithms;
- said server (3) generates said server random number Rₛ through said first pseudo-random function of at least said client random number R_{c} and said protocol version and/or a selected ciphering algorithm out of said list of supported ciphering algorithms and/or a selected compression algorithm out of said list of supported compression algorithms.

4. The method according to claim 3, wherein:
- said client (1) stores said protocol version and/or said selected ciphering algorithm and/or said selected compression algorithm in addition to said generator value g, said prime value p, said client random number R_{c} and said client mined value W or said additional random variable v to jointly form said unique persistent node identity.

5. The method according to one of claims 2 to 4, wherein said client (1) generates said client secret value X_{C} through said fourth pseudo-random function of at least said client mined value W and said server Diffie-Hellman value Y, and furthermore one or more of:
- a time period identifier T representing a time period;
- a zone identifier Z representing a zone, i.e. a group of networks, a network or a part of a network; and
- a node type identifier G representing a group of nodes,
and wherein said client (1) stores said time period identifier T and/or said zone identifier Z and/or said node type identifier G in addition to said generator value g, said prime value p, said client random number R_{c}, said client mined value W or said additional random variable v, and possibly said protocol version and/or said selected ciphering algorithm and/or said selected compression algorithm to jointly form a restricted unique persistent node identity.

6. The method according to one of claims 2 to 5, further comprising:
- said server (3) verifying if said shared secret key value K or said client Diffie-Hellman value Y_{c} satisfies said difficulty condition D in order to decide whether to communicate with said client (1) or which information to send to said client (1).

7. The method according to one of claims 2 to 6, further comprising:
- a subsequent server (5) obtaining said difficulty condition D from said difficulty controller (7);
- said client (1) retrieving said unique persistent node identity or said restricted unique persistent node identity from storage;
- said client (1) transferring to said subsequent server (5) a TLS ClientHello message (201) comprising said client random number R_{c};
- said subsequent server (5) generating said server random number Rₛ through said first pseudo-random function of at least said client random number R_{c};
- said subsequent server (5) transferring to said client (1) a TLS ServerHello message (202) comprising said server random number Rₛ;
- said client (1) verifying if said server random number Rₛ is resulting from said first pseudo-random function;
- said subsequent server (5) generating said server secret value X through said second pseudo-random function of at least said server random number Rₛ;
- said subsequent server (5) obtaining a generator value g of the Diffie-Hellman group and a prime value p for the Diffie-Hellman algorithm;
- said subsequent server (5) calculating said server Diffie-Hellman value Y for said generator value g, said server secret value X and said prime value p;
- said subsequent server (5) transferring to said client (1) a TLS ServerKeyExchange message (204) comprising said server Diffie-Hellman value Y, said generator value g and said prime value p;
- said client (1) verifying if said server Diffie-Hellman value Y is resulting from said second pseudo-random function, and if so:
- said client (1) retrieving said client mined value W from memory or storage or generating said client mined value W through said third pseudo-random function of said additional random variable v retrieved from memory or storage;
- said client (1) generating said client secret value X_{c} through said fourth pseudo-random function of at least said client mined value W and said server Diffie-Hellman value Y;
- said client (1) calculating said client Diffie-Hellman value Y_{c} for said generator value g, said client secret value X_{c} and said prime value p;
- said client (1) calculating said shared secret key value K from said server Diffie-Hellman value Y, said client secret value X_{c} and said prime value p;
- said client (1) transferring to said subsequent server (5) a TLS ClientKeyExchange message (210) comprising said client Diffie-Hellman value Y_{c} in encrypted form by encrypting said client Diffie-Hellman value Y_{c} with the public key PK from said subsequent server's public key certificate; and
- said subsequent server (5) calculating said same shared secret key value K from said client Diffie-Hellman value Y_{c}, said server secret value X and said prime value p.

8. The method according to claim 7, further comprising:
- said client (1) selecting a new client random value W or calculating said client random value W through said third pseudo-random function of a new random variable v';
- said client (1) generating a renewed client secret value X_{c}' through said fourth pseudo-random function of at least said new client random value W' and said server Diffie-Hellman value Y;
- said client (1) calculating a renewed client Diffie-Hellman value Y_{c}' for said generator value g, said renewed client secret value X_{c}' and said prime value p;
- said client (1) calculating a renewed shared secret key value K' from said server Diffie-Hellman value Y, said renewed client secret value X_{c}' and said prime value p;
- said client (1) verifying if said renewed shared secret key value K' or said renewed client Diffie-Hellman value Y_{c}' satisfies said difficulty condition D or a more stringent difficulty condition D' obtained from said difficulty controller (7), and if so:
- said client (1) transferring to said subsequent server (5) a TLS ClientKeyExchange message (310) comprising said renewed client Diffie-Hellman value Y_{c}' in encrypted form, either by encrypting said renewed client Diffie-Hellman value Y_{c}' with the public key PK from said subsequent server's public key certificate, or with said shared secret key value K, whereas said entire ClientKeyExchange message (310) may be encrypted using said shared secret key value K if said shared secret key value K is transported over the TLS Record Layer; and
- said subsequent server (5) calculating said same renewed shared secret key value K' from said renewed client Diffie-Hellman value Y_{c}', said server secret value X and said prime value p; and
- said subsequent server (5) verifying if said renewed shared secret key value K' or said renewed client Diffie-Hellman value Y_{c}' satisfies said difficulty condition D or said more stringent difficulty condition D' in order to decide whether to communicate with said client (1) or which information to send to said client (1).

9. The method according to one of claims 2 to 8, further comprising:
- said client (1) generating a renewed client random number R_{c}' and transferring to said server (3) or subsequent server (5) a TLS ClientHello message (401; 501) comprising said renewed client random number Rc';
- said server (3) or subsequent server (5) generating a renewed server random number Rₛ' through said first pseudo-random function of at least said renewed client random number R_{c}';
- said server (3) or subsequent server (5) transferring to said client (1) a TLS ServerHello message (402; 502) comprising said renewed server random number Rₛ';
- said client (1) verifying if said renewed server random number Rₛ' is resulting from said first pseudo-random function;
- said server (3) or subsequent server (5) generating a renewed server secret value X' through said second pseudo-random function of at least said renewed server random number Rₛ';
- said server (3) or subsequent server (5) reusing said generator value g of the Diffie-Hellman group and said prime value p for the Diffie-Hellman algorithm;
- said server (3) or subsequent server (5) calculating a renewed server Diffie-Hellman value Y' for said generator value g, said renewed server secret value X' and said prime value p;
- said server (3) or subsequent server (5) transferring to said client (1) a TLS ServerKeyExchange message (404; 504) comprising said renewed server Diffie-Hellman value Y', said generator value g and said prime value p;
- said client (1) verifying if said renewed server Diffie-Hellman value Y' is resulting from said second pseudo-random function, and if so:
- said client (1) generating a renewed client mined value W' as a random value or through said third pseudo-random function of a renewed additional random variable v' mined or retrieved from memory or storage, or said client (1) reusing said client mined value W or said additional random variable v;
- said client (1) generating a renewed client secret value X_{c}' through said fourth pseudo-random function of at least said client mined value W or said renewed client mined value W, and said renewed server Diffie-Hellman value Y';
- said client (1) calculating a renewed client Diffie-Hellman value Y_{c}' for said generator value g, said renewed client secret value X_{c}' and said prime value p;
- said client (1) calculating a renewed shared secret key value K' from said renewed server Diffie-Hellman value Y', said renewed client secret value X_{c}' and said prime value p;
- said client (1) verifying if said renewed shared secret key value K' or said renewed client Diffie-Hellman value Y_{c}' satisfies said difficulty condition D or said more stringent difficulty condition D', and if so:
- said client (1) storing said generator value g, said prime value p, said renewed client random number R_{c}' and said client mined value W or said renewed client mined value W' to jointly form a renewed unique persistent node identity;
- said client (1) transferring to said server (3) or subsequent server (5) a TLS ClientKeyExchange message (410; 510) comprising said renewed client Diffie-Hellman value Y_{C}' in encrypted form, either by encrypting said renewed client Diffie-Hellman value Y_{C}' with the public key PK from said server's or said subsequent server's certificate, or with said shared secret key value K, whereas said entire CientKeyExchange message (410; 510) may be encrypted using said shared secret key value K if said shared secret key K is transported over the TLS Record Layer; and
- said server (3) or subsequent server (5) calculating said same renewed shared secret key value K' from said renewed client Diffie-Hellman value Y_{c}', said renewed server secret value X' and said prime value p.

10. The method according to one of claims 2 to 8, further comprising:
- said client (1) generating an attempted client mined value W" as a random value or through said third pseudo-random function of an attempted additional random variable v" mined or retrieved from memory or storage;
- said client (1) calculating an attempted client secret value X_{c}" through said fourth pseudo-random function of at least said attempted client mined value W" and said server Diffie-Hellman value Y;
- said client (1) calculating an attempted client Diffie-Hellman value Y_{c}" for said generator value g, said attempted client secret value X_{c}" and said prime value p;
- said client (1) calculating an attempted shared secret key value K" from said server Diffie-Hellman value Y, said attempted client secret value X_{c}" and said prime value p;
- said client (1) verifying if said attempted shared secret key value K" or said attempted client Diffie-Hellman value Y_{c}" satisfies said difficulty condition D or a more stringent difficulty condition D" obtained from said difficulty controller (7), and if so:
- said client (1) storing said generator value g, said prime value p, said client random number R_{c} and said attempted client mined value W" or said attempted additional random variable v" to jointly form a subsequent unique persistent node identity;
- said client (1) transferring to said server (3) or subsequent server (5) a TLS ClientHello message (601; 701) comprising said client random number R_{c};
- said server (3) or subsequent server (5) generating said server random number Rₛ through said first pseudo-random function of at least said client random number R_{c};
- said server (3) or subsequent server (5) transferring to said client (1) a TLS ServerHello message (602; 702) comprising said server random number Rₛ;
- said client (1) verifying if said renewed server random number Rₛ is resulting from said first pseudo-random function;
- said server (3) or subsequent server (5) generating said server secret value X through said second pseudo-random function of at least said server random number Rₛ;
- said server (3) or subsequent server (5) reusing said generator value g of the Diffie-Hellman group and said prime value p for the Diffie-Hellman algorithm;
- said server (3) or subsequent server (5) calculating said server Diffie-Hellman value Y for said generator value g, said server secret value X and said prime value p;
- said server (3) or subsequent server (5) transferring to said client (1) a TLS ServerKeyExchange message (604; 704) comprising said server Diffie-Hellman value Y, said generator value g and said prime value p;
- said client (1) verifying if said server Diffie-Hellman value Y is resulting from said second pseudo-random function, and if so:
- said client (1) transferring to said server (3) or subsequent server (5) a TLS ClientKeyExchange message (610; 710) comprising said attempted client Diffie-Hellman value Y_{c}" in encrypted form, either by encrypting said attempted client Diffie-Hellman value Y_{c}" with the public key PK from said server's or said subsequent server's certificate, or with said shared secret key value K or said renewed shared secret key value K', whereas said entire TLS ClientKeyExchange message (610; 710) may be encrypted using said shared secret key value K or said renewed shared secret key value K' if said shared secret key value K or said renewed shared secret key value K' is transported over the TLS Record Layer; and
- said server (3) or subsequent server (5) calculating said same attempted shared secret key value K" from said attempted client Diffie-Hellman value Y_{c}", said server secret value X and said prime value p.

11. The method according to one of claims 2 to 10, further comprising:
- said server (3) or subsequent server (5) transmitting to said client (1) a TLS Certificate message comprising said server Diffie-Hellman value Y, said renewed server Diffie-Hellman value Y' and/or said server public key PK in said server public key certificate.

12. The method according to one of claims 2 to 11 wherein:
- an Elliptic Curve Diffie-Hellman key agreement protocol is used to establish said shared secret key value K, said renewed shared secret key value K' or said attempted shared secret key value K": and
- cryptographic parameters a and b are used instead of said generator value g of the Diffie-Hellman group and said prime value p for the Diffie-Hellman algorithm.

13. A client (1) configured to generate and use a unique persistent node identity for identifying and authenticating said client (1) in a telecommunication network (2), wherein said client (1) is configured to establish a secure TLS connection between said client (1) and a server (3), and to generate in collaboration with said server (3) a shared secret key value K through a computational algorithm with a difficulty condition D obtained from a difficulty controller (7) and limiting the number of valid node identities, said client (1) being configured to:
- obtain said difficulty condition D from said difficulty controller (7);
- generate a client random number R_{c};
- transfer to said server (3) a TLS ClientHello message (101) comprising said client random number R_{c} to enable said server (3) to:
▪ generate a server random number Rₛ through a first pseudo-random function of at least said client random number R_{c};
- receive from said server (3) a TLS ServerHello message (102) comprising said server random number Rₛ;
- verify if said server random number Rₛ is resulting from said first pseudo-random function;
- receive from said server (3) further configured to:
▪ generate a server secret value X through a second pseudo-random function of at least said server random number Rₛ;
▪ obtain a generator value g of the Diffie-Hellman group and a prime value p for the Diffie-Hellman algorithm; and
▪ calculate a server Diffie-Hellman value Y for said generator value g, said server secret value X and said prime value p,
a TLS Certificate message (103) or a TLS ServerKeyExchange message (104) comprising said server Diffie-Hellman value Y. said generator value g and said prime value p;
- verify if said server Diffie-Hellman value Y is resulting from said second pseudo-random function through the same steps as said server (3) for calculation of Y using said first pseudo-random function, said second pseudo-random function, said client random number R_{c}, said generator value g and said prime value p, and if so:
- generate a client mined value W as a random value or through a third pseudo-random function of an additional random variable v mined or retrieved from memory or storage;
- generate a client secret value X_{c} through a fourth pseudo-random function of at least said client mined value W and said server Diffie-Hellman value Y;
- calculate a client Diffie-Hellman value Y_{c} for said generator value g, said client secret value X_{c} and said prime value p;
- calculate said shared secret key value K from said server Diffie-Hellman value Y, said client secret value X_{c} and said prime value p;
- verify if said shared secret key value K or said client Diffie-Hellman value Y_{c} satisfies said difficulty condition D, and if so:
- store said generator value g, said prime value p, said client random number R_{c} and said client mined value W or said additional random variable v to jointly form said unique persistent node identity; and
- transfer to said server (3) a TLS ClientKeyExchange message (110) comprising said client Diffie-Hellman value Y_{c} in encrypted form, by encrypting said client Diffie-Hellman value Y_{c} with the public key PK from said server's public key certificate to enable said server (3) to:
▪ calculate said same shared secret key value K from said client Diffie-Hellman value Y_{c}, said server secret value X and said prime value p.

14. A server (3, 5) configured to generate and use a unique persistent node identity for identifying and authenticating a client (1) in a telecommunication network (2), wherein said server (3, 5) is configured to establish a secure TLS connection between said client (1) and said server (3, 5), and to generate in collaboration with said client (1) a shared secret key value K through a computational algorithm with a difficulty condition D obtained from a difficulty controller (7) and limiting the number of valid node identities, said server (3) being configured to:
- obtain said difficulty condition D from said difficulty controller (7);
- receive from said client (1) configured to:
▪ obtain said difficulty condition D from said difficulty controller (7); and
▪ generate a client random number R_{c},
a TLS ClientHello message (101) comprising said client random number R_{c}
- generate a server random number Rₛ through a first pseudo-random function of at least said client random number R_{c};
- transfer to said client (1) a TLS ServerHello message (102) comprising said server random number Rₛ to enable said client (1) to:
▪ verify if said server random number Rₛ is resulting from said first pseudo-random function;
- generate a server secret value X through a second pseudo-random function of at least said server random number Rₛ;
- obtain a generator value g of the Diffie-Hellman group and a prime value p for the Diffie-Hellman algorithm;
- calculate a server Diffie-Hellman value Y for said generator value g, said server secret value X and said prime value p;
- transfer to said client (1) a TLS Certificate message (103) or a TLS ServerKeyExchange message (104) comprising said server Diffie-Hellman value Y, said generator value g and said prime value p to enable said client (1) to:
▪ verify if said server Diffie-Hellman value Y is resulting from said second pseudo-random function through the same steps as said server (3) for calculation of Y using said first pseudo-random function, said second pseudo-random function, said client random number R_{c}, said generator value g and said prime value p, and if so:
▪ generate a client mined value W as a random value or through a third pseudo-random function of an additional random variable v mined or retrieved from memory or storage;
▪ generate a client secret value X_{c} through a fourth pseudo-random function of at least said client mined value W and said server Diffie-Hellman value Y;
▪ calculate a client Diffie-Hellman value Y_{c} for said generator value g, said client secret value X_{c} and said prime value p;
▪ calculate said shared secret key value K from said server Diffie-Hellman value Y, said client secret value X_{c} and said prime value p;
▪ verify if said shared secret key value K or said client Diffie-Hellman value Y_{c} satisfies said difficulty condition D, and if so:
▪ store said generator value g, said prime value p, said client random number R_{c} and said client mined value W or said additional random variable v to jointly form said unique persistent node identity;
- receive from said client (1) a TLS ClientKeyExchange message (110) comprising said client Diffie-Hellman value Y_{c} in encrypted form, by encrypting said client Diffie-Hellman value Y_{c} with the public key PK from said server's public key certificate; and
- calculate said same shared secret key value K from said client Diffie-Hellman value Y_{c}, said server secret value X and said prime value p.

## Patentansprüche

1. Ein Verfahren auf der Basis von Transportschichtsicherheit, abgekürzt TLS, zur Erzeugung und Verwendung einer eindeutigen persistenten Knotenidentität zur Identifizierung und Authentifizierung eines Clients (1) in einem Telekommunikationsnetzwerk (2), wobei dieses Verfahren das Aufbauen einer sicheren TLS-Verbindung zwischen dem Client (1) und einem Server (3) und das Generieren, am Client (1) und Server (3), eines gemeinsamen Geheimschlüsselwerts K über einen Berechnungsalgorithmus mit einer Schwierigkeitsbedingung D aus einem Schwierigkeitsregler (7) und das Begrenzen der Anzahl von gültigen Knotenkennungen umfasst, wobei dieses Verfahren Folgendes aufweist:
- Erhalten, über den Client (1) und den Server (3), der Schwierigkeitsbedingung D aus dem Schwierigkeitsregler (7);
- Generieren, über den Client (1), einer Client-Zufallszahl R_{c};
- Übermitteln, über den Client (1) an den Server (3), einer TLS-ClientHello-Nachricht (101) mit der Client-Zufallszahl R_{c};
- Generieren, über den Server (3), einer Server-Zufallszahl Rₛ über eine erste Pseudozufallsfunktion mindestens der Client-Zufallszahl R_{c};
- Übermitteln, über den Server (3) an den Client (1), einer TLS-ServerHello-Nachricht (102) mit der Server-Zufallszahl Rₛ;
- Überprüfen, über den Client (1), ob sich die Server-Zufallszahl Rₛ aus der ersten Pseudozufallsfunktion ergibt;
- Generieren, über den Server (3), eines Server-Geheimwerts X über eine zweite Pseudozufallsfunktion mindestens der Server-Zufallszahl Rₛ;
- Erhalten, über den Server (3), eines Generatorwerts g der Diffie-Hellman-Gruppe und einer Primzahl p für den Diffie-Hellman-Algorithmus;
- Berechnen, über den Server (3), eines Server-Diffie-Hellman-Werts Y für den Generatorwert g, den Server-Geheimwert X und die Primzahl p;
- Übermitteln, über den Server (3) an den Client (1), einer TLS-Zertifikatsnachricht (103) oder einer TLS-ServerKeyExchange-Nachricht (104) mit dem Server-Diffie-Hellman-Wert Y, dem Generatorwert g und der Primzahl p;
- Überprüfen, über den Client (1), ob sich der Server-Diffie-Hellman-Wert Y aus der zweiten Pseudozufallsfunktion ergibt, über dieselben Schritte wie beim Server (3) zum Berechnen von Y über die erste Pseudozufallsfunktion, die zweite Pseudozufallsfunktion, die Client-Zufallszahl R_{c}, den Generatorwert g und die Primzahl p, und falls dies zutrifft:
- Generieren, über den Client (1), eines Client-Mining-Werts W als Zufallswert oder über eine dritte Pseudozufallsfunktion einer zusätzlichen Zufallsvariablen v, die aus dem Speicher oder Arbeitsspeicher gewonnen oder aufgerufen wird;
- Generieren, über den Client (1), eines Client-Geheimwerts X_{c} über eine vierte Pseudozufallsfunktion mindestens des Client-Mining-Werts W und des Diffie-Hellman-Werts Y;
- Berechnen, über den Client (1), eines Client-Diffie-Hellman-Werts Y_{c} für den Generatorwert g, den Client-Geheimwert X_{c} und die Primzahl p;
- Berechnen, über den Client (1), des gemeinsamen Geheimschlüsselwerts K aus dem Server-Diffie-Hellman-Wert Y, dem Client-Geheimwert X_{c} und der Primzahl p;
- Überprüfen, über den Client (1), ob der gemeinsame Geheimschlüsselwert K oder der Client-Diffie-Hellman-Wert Y_{c} die Schwierigkeitsbedingung D erfüllt, und falls dies zutrifft:
- Speichern, über den Client (1), des Generatorwerts g, der Primzahl p, der Client-Zufallszahl R_{c} und des Client-Mining-Werts W oder der zusätzlichen Zufallsvariablen v, um gemeinsam die eindeutige persistente Knotenidentität zu bilden;
- Übermitteln, über den Client (1) an den Server (3), einer TLS-ClientKeyExchange-Nachricht (110) mit dem Client-Diffie-Hellman-Wert Y_{c} in verschlüsselter Form durch Verschlüsseln des Client-Diffie-Hellman-Werts Y_{c} mit dem öffentlichen Schlüssel PK aus dem öffentlichen Schlüsselzertifikat des Servers; und
- Berechnen, über den Server (3), des gleichen gemeinsamen Geheimschlüsselwerts K aus dem Client-Diffie-Hellman-Wert Y_{c}, dem Server-Geheimwert X und der Primzahl p.

2. Das Verfahren nach Anspruch 1, wobei dieses Verfahren ferner umfasst:
- Wählen, über den Client (1) zusätzlich zur Client-Zufallszahl R_{c}, auch des Generatorwerts g der Diffie-Hellman-Gruppe und der Primzahl p für den Diffie-Hellman-Algorithmus;
- Übermitteln, über den Client (1) an den Server (3) als Teil der TLS-ClientHello-Nachricht (101), auch des Generatorwerts g und der Primzahl p zum Erhalten, über den Server (3), des Generatorwerts g und der Primzahl p; und
- Generieren, über den Server (3), der Server-Zufallszahl Rₛ über die erste Pseudozufallsfunktion mindestens der Client-Zufallszahl R_{c}, des Generatorwerts g und der Primzahl p.

3. Das Verfahren nach Anspruch 2, mit:
- Übermitteln, über den Client (1) an den Server (3) als Teil der TLS-ClientHello-Nachricht (101), auch einer Protokollversion und/oder einer Liste der unterstützten Verschlüsselungsalgorithmen und/oder einer Liste der unterstützten Kompressionsalgorithmen;
- Generieren, über den Server (3), der Server-Zufallszahl Rₛ über die erste Pseudozufallsfunktion mindestens der Client-Zufallszahl R_{c} und der Protokollversion und/oder eines ausgewählten Verschlüsselungsalgorithmus aus der Liste von unterstützten Verschlüsselungsalgorithmen und/oder eines ausgewählten Kompressionsalgorithmus aus der Liste von unterstützten Kompressionsalgorithmen.

4. Das Verfahren nach Anspruch 3, mit:
- Speichern, über den Client (1), der Protokollversion und/oder des ausgewählten Verschlüsselungsalgorithmus und/oder des ausgewählten Kompressionsalgorithmus zusätzlich zum Generatorwert g, zur Primzahl p, zur Client-Zufallszahl R_{c} und zum Client-Mining-Wert W oder zur zusätzlichen Zufallsvariablen v, um gemeinsam die eindeutige persistente Knotenidentität zu bilden.

5. Das Verfahren nach einem der Ansprüche 2 bis 4, mit Generieren, über den Client (1), des Client-Zufallswerts X_{c} über die vierte Pseudozufallsfunktion mindestens des Client-Mining-Werts W und des Server-Diffie-Hellman-Werts Y, sowie zusätzlich ein oder mehrere Elemente von:
- einer Zeitraumkennung T, die einen Zeitraum darstellt;
- einer Zonenkennung Z, die eine Zone, d. h. eine Netzwerkgruppe, ein Netzwerk oder einen Teil eines Netzwerks, darstellt; und
- einer Knotentypkennung G, die eine Gruppe von Knoten darstellt,
und mit Speichern, über den Client (1), der Zeitraumkennung T und/oder der Zonenkennung Z und/oder der Knotentypkennung G zusätzlich zum Generatorwert g, zur Primzahl p, zur Client-Zufallszahl R_{c}, zum Client-Mining-Wert W oder zur zusätzlichen Zufallsvariablen v, und möglicherweise zur Protokollversion und/oder zum ausgewählten Verschlüsselungsalgorithmus und/oder zum ausgewählten Kompressionsalgorithmus, um gemeinsam eine eingeschränkte eindeutige persistente Knotenidentität zu bilden.

6. Das Verfahren nach einem der Ansprüche 2 bis 5, wobei das Verfahren ferner umfasst:
- Überprüfen, über den Server (3), ob der gemeinsame Geheimschlüsselwert K oder der Client-Diffie-Hellman-Wert Y_{c} die Schwierigkeitsbedingung D erfüllt, um zu entscheiden, ob eine Kommunikation mit dem Client (1) zustande kommt oder welche Informationen an den Client (1) zu senden sind.

7. Das Verfahren nach einem der Ansprüche 2 bis 6, wobei dieses Verfahren ferner umfasst:
- Erhalten, über einen nachfolgenden Server (5), der Schwierigkeitsbedingung D aus dem Schwierigkeitsregler (7);
- Aufrufen, über den Client (1), der eindeutigen persistenten Knotenidentität oder der eingeschränkten eindeutigen persistenten Knotenidentität aus dem Speicher;
- Übermitteln, über den Client (1) an den nachfolgenden Server (5), einer TLS-ClientHello-Nachricht (201) mit der Client-Zufallszahl R_{c};
- Generieren, über den nachfolgenden Server (5), der Server-Zufallszahl Rₛ über die erste Pseudozufallsfunktion mindestens der Client-Zufallszahl R_{c};
- Übermitteln, über den nachfolgenden Server (5) an den Client (1), einer TLS-ServerHello-Nachricht (202) mit der Server-Zufallszahl Rₛ;
- Überprüfen, über den Client (1), ob sich die Server-Zufallszahl Rₛ aus der ersten Pseudozufallsfunktion ergibt;
- Generieren, über den nachfolgenden Server (5), des Server-Geheimwerts X über die zweite Pseudozufallsfunktion mindestens der Server-Zufallszahl Rₛ;
- Erhalten, über den nachfolgenden Server (5), eines Generatorwerts g der Diffie-Hellman-Gruppe und einer Primzahl p für den Diffie-Hellman-Algorithmus;
- Berechnen, über den nachfolgenden Server (5), des Server-Diffie-Hellman-Werts Y für den Generatorwert g, den Server-Geheimwert X und die Primzahl p;
- Übermitteln, über den nachfolgenden Server (5) an den Client (1), einer TLS-ServerKeyExchange-Nachricht (204) mit dem Server-Diffie-Hellman-Wert Y, dem Generatorwert g und der Primzahl p;
- Überprüfen, über den Client (1), ob sich der Server-Diffie-Hellman-Wert Y aus der zweiten Pseudozufallsfunktion ergibt, und falls dies zutrifft:
- Aufrufen, über den Client (1), des Client-Mining-Werts W aus dem Speicher oder Arbeitsspeicher oder Generieren des Client-Mining-Werts W über die dritte Pseudozufallsfunktion der zusätzlichen Zufallsvariablen v, die aus dem Speicher oder Arbeitsspeicher aufgerufen wird;
- Generieren, über den Client (1), des Client-Geheimwerts X_{c} über die vierte Pseudozufallsfunktion mindestens des Client-Mining-Werts W und des Diffie-Hellman-Werts Y;
- Berechnen, über den Client (1), des Client-Diffie-Hellman-Werts Y_{c} für den Generatorwert g, den Client-Geheimwert X_{c} und die Primzahl p;
- Berechnen, über den Client (1), des gemeinsamen Geheimschlüsselwerts K aus dem Server-Diffie-Hellman-Wert Y, dem Client-Geheimwert X_{c} und der Primzahl p;
- Übermitteln, über den Client (1) an den nachfolgenden Server (5), einer TLS-ClientKeyExchange-Nachricht (210) mit dem Client-Diffie-Hellman-Wert Y_{c} in verschlüsselter Form durch Verschlüsseln des Client-Diffie-Hellman-Werts Y_{c} mit dem öffentlichen Schlüssel PK aus dem öffentlichen Schlüsselzertifikat des nachfolgenden Servers; und
- Berechnen, über den nachfolgenden Server (5), des gleichen gemeinsamen Geheimschlüsselwerts K aus dem Client-Diffie-Hellman-Wert Y_{c}, dem Server-Geheimwert X und der Primzahl p.

8. Das Verfahren nach Anspruch 7, wobei dieses Verfahren ferner umfasst:
- Wählen, über den Client (1), eines neuen Client-Zufallswerts W' oder Berechnen des Client-Zufallswerts W' über die dritte Pseudozufallsfunktion einer neuen Zufallsvariablen v' ;
- Generieren, über den Client (1), eines erneuerten Client-Geheimwerts X_{c}' über die vierte Pseudozufallsfunktion mindestens des neuen Client-Zufallswerts W' und des Server-Diffie-Hellman-Werts Y;
- Berechnen, über den Client (1), eines erneuerten Client-Diffie-Hellman-Werts Y_{c}' für den Generatorwert g, den erneuerten Client-Geheimwert X_{c}' und die Primzahl p;
- Berechnen, über den Client (1), eines erneuerten gemeinsamen Geheimschlüsselwerts K' aus dem Server-Diffie-Hellman-Wert Y, dem erneuerten Client-Geheimwert X_{c}' und der Primzahl p;
- Überprüfen, über den Client (1), ob der erneuerte gemeinsame Geheimschlüsselwert K' oder der erneuerte Client-Diffie-Hellman-Wert Y_{c}' die Schwierigkeitsbedingung D oder eine strengere Schwierigkeitsbedingung D' aus dem Schwierigkeitsregler (7) erfüllt, und falls dies zutrifft:
- Übermitteln, über den Client (1) an den nachfolgenden Server (5), einer TLS-ClientKeyExchange-Nachricht (310) mit dem erneuerten Client-Diffie-Hellman-Wert Y_{c}' in verschlüsselter Form, entweder durch Verschlüsseln des erneuerten Client-Diffie-Hellman-Werts Y_{c}' mit dem öffentlichen Schlüssel PK aus dem öffentlichen Schlüsselzertifikat des nachfolgenden Servers oder mit dem gemeinsamen Geheimschlüsselwert K, wobei die vollständige ClientKeyExchange-Nachricht (310) unter Einsatz des gemeinsamen Geheimschlüsselwerts K verschlüsselt werden kann, wenn der gemeinsame Geheimschlüsselwert K über die TLS-Aufzeichnungsschicht transportiert wird; und
- Berechnen, über den nachfolgenden Server (5), des gleichen erneuerten gemeinsamen Geheimschlüsselwerts K' aus dem erneuerten Client-Diffie-Hellman-Wert Y_{c}', dem Server-Geheimwert X und der Primzahl p; und
- Überprüfen, über den nachfolgenden Server (5), ob der erneuerte gemeinsame Geheimschlüsselwert K' oder der erneuerte Client-Diffie-Hellman-Wert Y_{c'} die Schwierigkeitsbedingung D oder die strengere Schwierigkeitsbedingung D' erfüllt, um zu entscheiden, ob eine Kommunikation mit dem Client (1) zustande kommt oder welche Informationen an den Client (1) zu senden sind.

9. Das Verfahren nach einem der Ansprüche 2 bis 8, wobei dieses Verfahren ferner umfasst:
- Generieren, über den Client (1), einer erneuerten Client-Zufallszahl R_{c'} und Übermitteln, an den Server (3) oder den nachfolgenden Server (5), einer TLS-ClientHello-Nachricht (401; 501) mit der erneuerten Client-Zufallszahl R_{c}';
- Generieren, über den Server (3) oder den nachfolgenden Server (5), einer erneuerten Server-Zufallszahl Rₛ' über die erste Pseudozufallsfunktion mindestens der erneuerten Client-Zufallszahl R_{c}';
- Übermitteln, über den Server (3) oder den nachfolgenden Server (5) an den Client (1), einer TLS-ServerHello-Nachricht (402; 502) mit der erneuerten Server-Zufallszahl Rₛ';
- Überprüfen, über den Client (1), ob sich die erneuerte Server-Zufallszahl Rₛ' aus der ersten Pseudozufallsfunktion ergibt;
- Generieren, über den Server (3) oder den nachfolgenden Server (5), eines erneuerten Server-Geheimwerts X' über eine zweite Pseudozufallsfunktion mindestens der erneuerten Server-Zufallszahl Rₛ';
- Wiederverwenden, über den Server (3) oder den nachfolgenden Server (5), des Generatorwerts g der Diffie-Hellman-Gruppe und der Primzahl p für den Diffie-Hellman-Algorithmus;
- Berechnen, über den Server (3) oder den nachfolgenden Server (5), eines erneuerten Server-Diffie-Hellman-Werts Y' für den Generatorwert g, den erneuerten Server-Geheimwert X' und die Primzahl p;
- Übermitteln, über den Server (3) oder den nachfolgenden Server (5) an den Client (1), einer TLS-ServerKeyExchange-Nachricht (404; 504) mit dem erneuerten Server-Diffie-Hellman-Wert Y', dem Generatorwert g und der Primzahl p;
- Überprüfen, über den Client (1), ob sich der erneuerte Server-Diffie-Hellman-Wert Y` aus der zweiten Pseudozufallsfunktion ergibt, und falls dies zutrifft:
- Generieren, über den Client (1), eines erneuerten Client-Mining-Werts W' als Zufallswert oder über die dritte Pseudozufallsfunktion einer erneuerten zusätzlichen Zufallsvariablen v', die aus dem Speicher oder Arbeitsspeicher gewonnen oder aufgerufen wird, oder Wiederverwenden, über den Client (1), des Client-Mining-Werts W oder der zusätzlichen Zufallsvariablen v;
- Generieren, über den Client (1), eines erneuerten Client-Geheimwerts X_{c}' über die vierte Pseudozufallsfunktion mindestens des Client-Mining-Werts W oder des erneuerten Client-Mining-Werts W' und des erneuerten Diffie-Hellman-Werts Y';
- Berechnen, über den Client (1), eines erneuerten Client-Diffie-Hellman-Werts Y_{c}' für den Generatorwert g, den erneuerten Client-Geheimwert X_{c}' und die Primzahl p;
- Berechnen, über den Client (1), eines erneuerten gemeinsamen Geheimschlüsselwerts K' aus dem erneuerten Server-Diffie-Hellman-Wert Y', dem erneuerten Client-Geheimwert X_{c}' und der Primzahl p;
- Überprüfen, über den Client (1), ob der erneuerte gemeinsame Geheimschlüsselwert K' oder der erneuerte Client-Diffie-Hellman-Wert Yc' die Schwierigkeitsbedingung D oder die strengere Schwierigkeitsbedingung D' erfüllt, und falls dies zutrifft:
- Speichern, über den Client (1), des Generatorwerts g, der Primzahl p, der erneuerten Client-Zufallszahl R_{c}' und des Client-Mining-Werts W oder des erneuerten Client-Mining-Werts W', um gemeinsam eine erneuerte eindeutige persistente Knotenidentität zu bilden;
- Übermitteln, über den Client (1) an den Server (3) oder den nachfolgenden Server (5), einer TLS-ClientKeyExchange-Nachricht (410; 510) mit dem erneuerten Client-Diffie-Hellman-Wert Y_{c}' in verschlüsselter Form, entweder durch Verschlüsseln des erneuerten Client-Diffie-Hellman-Werts Y_{c}' mit dem öffentlichen Schlüssel PK aus dem Zertifikat des Servers oder des nachfolgenden Servers oder mit dem gemeinsamen Geheimschlüsselwert K, wobei die vollständige ClientKeyExchange-Nachricht (410; 510) unter Einsatz des gemeinsamen Geheimschlüsselwerts K verschlüsselt werden kann, wenn der gemeinsame Geheimschlüsselwert K über die TLS-Aufzeichnungsschicht transportiert wird; und
- Berechnen, über den Server (3) oder den nachfolgenden Server (5), des gleichen erneuerten gemeinsamen Geheimschlüsselwerts K' aus dem erneuerten Client-Diffie-Hellman-Wert Y_{c}', dem erneuerten Server-Geheimwert X' und der Primzahl p.

10. Das Verfahren nach einem der Ansprüche 2 bis 8, wobei dieses Verfahren ferner umfasst:
- Generieren, über den Client (1), eines gewünschten Client-Mining-Werts W" als Zufallswert oder über eine dritte Pseudozufallsfunktion einer gewünschten zusätzlichen Zufallsvariablen v", die aus dem Speicher oder Arbeitsspeicher gewonnen oder aufgerufen wird;
- Berechnen, über einen Client (1), eines gewünschten Client-Geheimwerts X_{c}" über die vierte Pseudozufallsfunktion mindestens des gewünschten Client-Mining-Werts W" and des Server-Diffie-Hellman-Werts Y;
- Berechnen, über den Client (1), eines gewünschten Client-Diffie-Hellman-Werts Y_{c}" für den Generatorwert g, den gewünschten Client-Geheimwert X_{c}" und die Primzahl p;
- Berechnen, über den Client (1), eines gewünschten gemeinsamen Geheimschlüsselwerts K" aus dem Server-Diffie-Hellman-Wert Y, dem gewünschten Client-Geheimwert X_{c}" und der Primzahl p;
- Überprüfen, über den Client (1), ob der gewünschte gemeinsame Geheimschlüsselwert K" oder der gewünschte Client-Diffie-Hellman-Wert Y_{c}" die Schwierigkeitsbedingung D oder eine strengere Schwierigkeitsbedingung D" aus dem Schwierigkeitsregler (7) erfüllt, und falls dies zutrifft:
- Speichern, über den Client (1), des Generatorwerts g, der Primzahl p, der Client-Zufallszahl R_{c} und des gewünschten Client-Mining-Werts W" oder der gewünschten zusätzlichen Zufallsvariablen v", um gemeinsam eine nachfolgende eindeutige persistente Knotenidentität zu bilden;
- Übermitteln, über den Client (1) an den Server (3) oder den nachfolgenden Server (5), einer TLS-ClientHello-Nachricht (601; 701) mit der Client-Zufallszahl R_{c};
- Generieren, über den Server (3) oder den nachfolgenden Server (5), einer Server-Zufallszahl Rₛ über eine erste Pseudozufallsfunktion mindestens der Client-Zufallszahl R_{c};
- Übermitteln, über den Server (3) oder den nachfolgenden Server (5) an den Client (1), einer TLS-ServerHello-Nachricht (602; 702) mit der Server-Zufallszahl Rₛ;
- Überprüfen, über den Client (1), ob sich die erneuerte Server-Zufallszahl Rₛ aus der ersten Pseudozufallsfunktion ergibt;
- Generieren, über den Server (3) oder den nachfolgenden Server (5), eines Server-Geheimwerts X über eine zweite Pseudozufallsfunktion mindestens der Server-Zufallszahl Rₛ;
- Wiederverwenden, über den Server (3) oder den nachfolgenden Server (5), des Generatorwerts g der Diffie-Hellman-Gruppe und der Primzahl p für den Diffie-Hellman-Algorithmus;
- Berechnen, über den Server (3) oder den nachfolgenden Server (5), des Server-Diffie-Hellman-Werts Y für den Generatorwert g, den Server-Geheimwert X und die Primzahl p;
- Übermitteln, über den Server (3) oder den nachfolgenden Server (5) an den Client (1), einer TLS-ServerKeyExchange-Nachricht (604; 704) mit dem Server-Diffie-Hellman-Wert Y, dem Generatorwert g und der Primzahl p;
- Überprüfen, über den Client (1), ob sich der Server-Diffie-Hellman-Wert Y aus der zweiten Pseudozufallsfunktion ergibt, und falls dies zutrifft:
- Übermitteln, über den Client (1) an den Server (3) oder den nachfolgenden Server (5), einer TLS-ClientKeyExchange-Nachricht (610; 710) mit dem gewünschten Client-Diffie-Hellman-Wert Y_{c}" in verschlüsselter Form, entweder durch Verschlüsseln des gewünschten Client-Diffie-Hellman-Werts Y_{c}" mit dem öffentlichen Schlüssel PK aus dem Zertifikat des Servers oder des nachfolgenden Servers oder mit dem gemeinsamen Geheimschlüsselwert K oder dem erneuerten gemeinsamen Geheimschlüsselwert K`, wobei die vollständige ClientKeyExchange-Nachricht (610; 710) unter Einsatz des gemeinsamen Geheimschlüsselwerts K oder des erneuerten gemeinsamen Geheimschlüsselwert K' verschlüsselt werden kann, wenn der gemeinsame Geheimschlüsselwert K oder der erneuerte gemeinsame Geheimschlüsselwert K' über die TLS-Aufzeichnungsschicht transportiert wird; und
- Berechnen, über den Server (3) oder den nachfolgenden Server (5), des gleichen gewünschten gemeinsamen Geheimschlüsselwerts K" aus dem gewünschten Client-Diffie-Hellman-Wert Y_{c}", dem Server-Geheimwert X und der Primzahl p.

11. Das Verfahren nach einem der Ansprüche 2 bis 10, wobei dieses Verfahren ferner umfasst:
- Übermitteln, über den Server (3) oder den nachfolgenden Server (5) an den Client (1), einer TLS-Zertifikatsnachricht mit dem Server-Diffie-Hellman-Wert Y, dem erneuerten Server-Diffie-Hellman-Wert Y' und/oder dem öffentlichen Schlüssel PK des Servers im öffentlichen Schlüsselzertifikat des Servers.

12. Das Verfahren nach einem der Ansprüche 2 bis 11, wobei dieses Verfahren ferner umfasst:
- Nutzung eines Diffie-Hellman-Schlüsselaustauschprotokolls mittels elliptischer Kurven, um den gemeinsamen Geheimschlüsselwert K, den erneuerten gemeinsamen Geheimschlüsselwert K' oder den gewünschten gemeinsamen Geheimschlüsselwert K" festzulegen; and
- Nutzung der kryptographischen Parameter a und b anstatt des Generatorwerts g der Diffie-Hellman-Gruppe und der Primzahl p für den Diffie-Hellman-Algorithmus.

13. Ein Client (1), der so konfiguriert ist, dass eine eindeutige persistente Knotenidentität zur Identifizierung und Authentifizierung des Clients (1) in einem Telekommunikationsnetzwerk (2) erzeugt und verwendet wird, wobei der Client (1) so konfiguriert ist, dass eine sichere TLS-Verbindung zwischen dem Client (1) und einem Server (3) aufgebaut wird und dass, in Zusammenarbeit mit dem Server (3), ein gemeinsamer Geheimschlüsselwerts K über einen Berechnungsalgorithmus mit einer Schwierigkeitsbedingung D aus einem Schwierigkeitsregler (7) generiert wird und die Anzahl von gültigen Knotenkennungen begrenzt wird, wobei der Client (1) für Folgendes ausgelegt ist:
- Erhalten der Schwierigkeitsbedingung D aus dem Schwierigkeitsregler (7);
- Generieren einer Client-Zufallszahl R_{c};
- Übermitteln, an den Server (3), einer TLS-ClientHello-Nachricht (101) mit der Client-Zufallszahl R_{c}, um dem Server (3) Folgendes zu ermöglichen:
▪ Generieren einer Server-Zufallszahl Rₛ über eine erste Pseudozufallsfunktion mindestens der Client-Zufallszahl R_{c};
- Empfangen, vom Server (3), einer TLS-ServerHello-Nachricht (102) mit der Server-Zufallszahl Rₛ;
- Überprüfen, ob sich die Server-Zufallszahl Rₛ aus der ersten Pseudozufallsfunktion ergibt;
- Empfangen, vom Server (3), der ferner für Folgendes ausgelegt ist:
▪ Generieren eines Server-Geheimwerts X über eine zweite Pseudozufallsfunktion mindestens der Server-Zufallszahl Rₛ;
▪ Erhalten eines Generatorwerts g der Diffie-Hellman-Gruppe und einer Primzahl p für den Diffie-Hellman-Algorithmus; und
▪ Berechnen eines Server-Diffie-Hellman-Werts Y für den Generatorwert g, den Server-Geheimwert X und die Primzahl p;
einer TLS-Zertifikatsnachricht (103) oder einer TLS-ServerKeyExchange-Nachricht (104) mit dem Server-Diffie-Hellman-Wert Y, dem Generatorwert g und der Primzahl p;
- Überprüfen, ob sich der Server-Diffie-Hellman-Wert Y aus der zweiten Pseudozufallsfunktion ergibt, über dieselben Schritte wie beim Server (3) zum Berechnen von Y über die erste Pseudozufallsfunktion, die zweite Pseudozufallsfunktion, die Client-Zufallszahl R_{c}, den Generatorwert g und die Primzahl p, und falls dies zutrifft:
- Generieren eines Client-Mining-Werts W als Zufallswert oder über eine dritte Pseudozufallsfunktion einer zusätzlichen Zufallsvariablen v, die aus dem Speicher oder Arbeitsspeicher gewonnen oder aufgerufen wird;
- Generieren eines Client-Geheimwerts X_{c} über eine vierte Pseudozufallsfunktion mindestens des Client-Mining-Werts W und des Diffie-Hellman-Werts Y;
- Berechnen eines Client-Diffie-Hellman-Werts Y_{c} für den Generatorwert g, den Client-Geheimwert X_{c} und die Primzahl p;
- Berechnen des gemeinsamen Geheimschlüsselwerts K aus dem Server-Diffie-Hellman-Wert Y, dem Client-Geheimwert X_{c} und der Primzahl p;
- Überprüfen, ob der gemeinsame Geheimschlüsselwert K oder der Client-Diffie-Hellman-Wert Y_{c} die Schwierigkeitsbedingung D erfüllt, und falls dies zutrifft:
- Speichern des Generatorwerts g, der Primzahl p, der Client-Zufallszahl R_{c} und des Client-Mining-Werts W oder der zusätzlichen Zufallsvariablen v, um gemeinsam die eindeutige persistente Knotenidentität zu bilden; und
- Übermitteln, an den Server (3), einer TLS-ClientKeyExchange-Nachricht (110) mit dem Client-Diffie-Hellman-Wert Y_{c} in verschlüsselter Form durch Verschlüsseln des Client-Diffie-Hellman-Werts Y_{c} mit dem öffentlichen Schlüssel PK aus dem öffentlichen Schlüsselzertifikat des Servers, um dem Server (3) Folgendes zu ermöglichen:
▪ Berechnen des gleichen gemeinsamen Geheimschlüsselwerts K aus dem Client-Diffie-Hellman-Wert Y_{c}, dem Server-Geheimwert X und der Primzahl p.

14. Ein Server (3, 5), der so konfiguriert ist, dass eine eindeutige persistente Knotenidentität zur Identifizierung und Authentifizierung eines Clients (1) in einem Telekommunikationsnetzwerk (2) erzeugt und verwendet wird, wobei der Server (3, 5) so konfiguriert ist, dass eine sichere TLS-Verbindung zwischen dem Client (1) und dem Server (3, 5) aufgebaut wird und dass, in Zusammenarbeit mit dem Client (1), ein gemeinsamer Geheimschlüsselwerts K über einen Berechnungsalgorithmus mit einer Schwierigkeitsbedingung D aus einem Schwierigkeitsregler (7) generiert wird und die Anzahl von gültigen Knotenkennungen begrenzt wird, wobei der Server (3) für Folgendes ausgelegt ist:
- Erhalten der Schwierigkeitsbedingung D aus dem Schwierigkeitsregler (7);
- Empfangen, vom Client (1), der für Folgendes ausgelegt ist:
▪ Erhalten der Schwierigkeitsbedingung D aus dem Schwierigkeitsregler (7); und
▪ Generieren einer Client-Zufallszahl R_{c};
einer TLS-ClientHello-Nachricht (101) mit der Client-Zufallszahl R_{c};
- Generieren einer Server-Zufallszahl Rₛ über eine erste Pseudozufallsfunktion mindestens der Client-Zufallszahl R_{c};
- Übermitteln, an den Client (1), einer TLS-ServerHello-Nachricht (102) mit der Server-Zufallszahl Rₛ, um dem Client (1) Folgendes zu ermöglichen:
▪ Überprüfen, ob sich die Server-Zufallszahl Rₛ aus der ersten Pseudozufallsfunktion ergibt;
- Generieren eines Server-Geheimwerts X über eine zweite Pseudozufallsfunktion mindestens der Server-Zufallszahl Rₛ;
- Erhalten eines Generatorwerts g der Diffie-Hellman-Gruppe und einer Primzahl p für den Diffie-Hellman-Algorithmus;
- Berechnen eines Server-Diffie-Hellman-Werts Y für den Generatorwert g, den Server-Geheimwert X und die Primzahl p;
- Übermitteln, an den Client(1), einer TLS-Zertifikatsnachricht (103) oder einer TLS-ServerKeyExchange-Nachricht (104) mit dem Server-Diffie-Hellman-Wert Y, dem Generatorwert g und der Primzahl p, um dem Client (1) Folgendes zu ermöglichen:
▪ Überprüfen, ob sich der Server-Diffie-Hellman-Wert Y aus der zweiten Pseudozufallsfunktion ergibt, über dieselben Schritte wie beim Server (3) zum Berechnen von Y über die erste Pseudozufallsfunktion, die zweite Pseudozufallsfunktion, die Client-Zufallszahl R_{c}, den Generatorwert g und die Primzahl p, und falls dies zutrifft:
▪ Generieren eines Client-Mining-Werts W als Zufallswert oder über eine dritte Pseudozufallsfunktion einer zusätzlichen Zufallsvariablen v, die aus dem Speicher oder Arbeitsspeicher gewonnen oder aufgerufen wird;
▪ Generieren eines Client-Geheimwerts X_{c} über eine vierte Pseudozufallsfunktion mindestens des Client-Mining-Werts W und des Diffie-Hellman-Werts Y;
▪ Berechnen eines Client-Diffie-Hellman-Werts Y_{c} für den Generatorwert g, den Client-Geheimwert X_{c} und die Primzahl p;
▪ Berechnen des gemeinsamen Geheimschlüsselwerts K aus dem Server-Diffie-Hellman-Wert Y, dem Client-Geheimwert X_{c} und der Primzahl p;
▪ Überprüfen, ob der gemeinsame Geheimschlüsselwert K oder der Client-Diffie-Hellman-Wert Y_{c} die Schwierigkeitsbedingung D erfüllt, und falls dies zutrifft:
▪ Speichern des Generatorwerts g, der Primzahl p, der Client-Zufallszahl R_{c} und des Client-Mining-Werts W oder der zusätzlichen Zufallsvariablen v, um gemeinsam die eindeutige persistente Knotenidentität zu bilden;
- Empfangen, vom Client (1), einer TLS-ClientKeyExchange-Nachricht (110) mit dem Client-Diffie-Hellman-Wert Y_{c} in verschlüsselter Form durch Verschlüsseln des Client-Diffie-Hellman-Werts Y_{c} mit dem öffentlichen Schlüssel PK aus dem öffentlichen Schlüsselzertifikat des Servers, und
- Berechnen des gleichen gemeinsamen Geheimschlüsselwerts K aus dem Client-Diffie-Hellman-Wert Y_{c}, dem Server-Geheimwert X und der Primzahl p.

## Revendications

1. Procédé basé sur une Sécurité de la Couche Transport, abrégée en TLS, destiné à générer et utiliser une identité de nœud persistant unique pour identifier et authentifier un client (1) dans un réseau de télécommunication (2), ledit procédé comprenant l'établissement d'une connexion TLS sécurisée entre ledit client (1) et un serveur (3) et la génération chez ledit client (1) et ledit serveur (3) d'une valeur de clé privée partagée K via un algorithme de calcul avec une condition de difficulté D obtenue depuis un contrôleur de difficulté (7) et qui limite le nombre d'identités de nœud valides, ledit procédé comprenant le fait que :
- ledit client (1) et ledit serveur (3) obtiennent ladite condition de difficulté D depuis ledit contrôleur de difficulté (7) ;
- ledit client (1) génère un nombre aléatoire de client R_{c} ;
- ledit client (1) transfère audit serveur (3) un message TLS ClientHello (101) qui comprend ledit nombre aléatoire de client R_{c} ;
- ledit serveur (3) génère un nombre aléatoire de serveur Rₛ via une première fonction pseudo-aléatoire d'au moins ledit nombre aléatoire de client R_{c} ;
- ledit serveur (3) transfère audit client (1) un message TLS ServerHello (102) qui comprend ledit nombre aléatoire de serveur Rₛ ;
- ledit client (1) vérifie si ledit nombre aléatoire de serveur Rₛ résulte de ladite première fonction pseudo-aléatoire ;
- ledit serveur (3) génère une valeur privée de serveur X via une deuxième fonction pseudo-aléatoire d'au moins ledit nombre aléatoire de serveur Rₛ ;
- ledit serveur (3) obtient une valeur de générateur g du groupe Diffie-Hellman et une valeur de nombre premier p pour l'algorithme de Diffie-Hellman ;
- ledit serveur (3) calcule une valeur Diffie-Hellman de serveur Y pour ladite valeur de générateur g, ladite valeur privée de serveur X et ladite valeur de nombre premier p ;
- ledit serveur (3) transfère audit client (1) un message TLS Certificate (103) ou un message TLS ServerKeyExchange (104) qui comprend ladite valeur Diffie-Hellman de serveur Y, ladite valeur de générateur g et ladite valeur de nombre premier p ;
- ledit client (1) vérifie si ladite valeur Diffie-Hellman de serveur Y résulte de ladite deuxième fonction pseudo-aléatoire via les mêmes étapes que ledit serveur (3) pour le calcul de Y à l'aide de ladite première fonction pseudo-aléatoire, ladite deuxième fonction pseudo-aléatoire, ledit nombre aléatoire de client R_{c}, ladite valeur de générateur g et ladite valeur de nombre premier p, et si tel est le cas :
- ledit client (1) génère une valeur extraite de client W en tant que valeur aléatoire ou via une troisième fonction pseudo-aléatoire d'une variable aléatoire supplémentaire v extraite ou récupérée depuis une mémoire ou un stockage ;
- ledit client (1) génère une valeur privée de client X_{c} via une quatrième fonction pseudo-aléatoire d'au moins la valeur extraite de client W et ladite valeur Diffie-Hellman de serveur Y ;
- ledit client (1) calcule une valeur Diffie-Hellman de client Y_{c} pour ladite valeur de générateur g, ladite valeur privée de client X_{c} et ladite valeur de nombre premier p ;
- ledit client (1) calcule ladite valeur de clé privée partagée K à partir de ladite valeur Diffie-Hellman de serveur Y, ladite valeur privée de client X_{c} et ladite valeur de nombre premier p ;
- ledit client (1) vérifie si ladite valeur de clé privée partagée K ou ladite valeur Diffie-Hellman de client Y_{c} satisfait ladite condition de difficulté D, et si tel est le cas :
- ledit client (1) stocke ladite valeur de générateur g, ladite valeur de nombre premier p, ledit nombre aléatoire de client R_{c} et ladite valeur extraite de client W ou ladite variable aléatoire supplémentaire v pour former conjointement ladite identité de nœud persistante unique ;
- ledit client (1) transfère audit serveur (3) un message TLS ClientKeyExchange (110) qui comprend ladite valeur Diffie-Hellman de client Y_{c} sous une forme cryptée, en cryptant ladite valeur Diffie-Hellman de client Y_{c} avec la clé publique PK depuis ledit certificat de clé publique de serveur ; et
- ledit serveur (3) calcule ladite même valeur de clé privée partagée K à partir de ladite valeur Diffie-Hellman de client Y_{c}, ladite valeur privée de serveur X et ladite valeur de nombre premier p.

2. Procédé selon la revendication 1, qui comprend en outre le fait que :
- ledit client (1) sélectionne en plus dudit nombre aléatoire de client R_{c}, également ladite valeur de générateur g du groupe Diffie-Hellman et ladite valeur de nombre premier p pour l'algorithme de Diffie-Hellman ;
- ledit client (1) transfère audit serveur (3) en tant que partie dudit message TLS ClientHello (101) également ladite valeur de générateur g et ladite valeur de nombre premier p, ce qui résulte dans le fait que ledit serveur (3) obtient ladite valeur de générateur g et ladite valeur de nombre premier p ; et
- ledit serveur (3) génère ledit nombre aléatoire de serveur Rₛ via ladite première fonction pseudo-aléatoire d'au moins ledit nombre aléatoire de client R_{c}, ladite valeur de générateur g et ladite valeur de nombre premier p.

3. Procédé selon la revendication 2, dans lequel :
- ledit client (1) transfère audit serveur (3) en tant que partie dudit message TLS ClientHello (101) également une version de protocole et/ou une liste d'algorithmes de cryptage supportés et/ou une liste d'algorithmes de compression supportés ;
- ledit serveur (3) génère ledit nombre aléatoire de serveur Rₛ via ladite première fonction pseudo-aléatoire d'au moins ledit nombre aléatoire de client R_{c} et ladite version de protocole et/ou un algorithme de cryptage sélectionné dans ladite liste d'algorithmes de cryptage supportés et/ou un algorithme de compression sélectionné dans ladite liste d'algorithmes de compression supportés.

4. Procédé selon la revendication 3, dans lequel :
- ledit client (1) stocke ladite version de protocole et/ou ledit algorithme de cryptage sélectionné et/ou ledit algorithme de compression sélectionné en plus de ladite valeur de générateur g, ladite valeur de nombre premier p, ledit nombre aléatoire de client R_{c} et ladite valeur extraite de client W ou ladite variable aléatoire supplémentaire v pour former conjointement ladite identité de nœud persistante unique.

5. Procédé selon l'une des revendications 2 à 4, dans lequel ledit client (1) génère ladite valeur privée de client X_{c} via ladite quatrième fonction pseudo-aléatoire d'au moins ladite valeur extraite de client W et ladite valeur Diffie-Hellman de serveur Y, et en outre un ou plusieurs parmi :
- un identificateur de période de temps T qui représente une période de temps ;
- un identificateur de zone Z qui représente une zone, c'est-à-dire un groupe de réseaux, un réseau ou une partie de réseau ; et
- un identificateur de type de nœud G qui représente un groupe de nœuds,
et dans lequel ledit client (1) stocke ledit identificateur de période de temps T et/ou ledit identificateur de zone Z et/ou ledit identificateur de type de nœud G en plus de ladite valeur de générateur g, ladite valeur de nombre premier p, ledit nombre aléatoire de client R_{c}, ladite valeur extraite de client W ou ladite variable aléatoire supplémentaire v, et possiblement ladite version de protocole et/ou ledit algorithme de cryptage sélectionné et/ou ledit algorithme de compression sélectionné pour former conjointement une identité de nœud persistante unique restreinte.

6. Procédé selon l'une des revendications 2 à 5, qui comprend en outre le fait que :
- ledit serveur (3) vérifie si ladite valeur de clé privée partagée K ou ladite valeur Diffie-Hellman de client Y_{c} satisfait ladite condition de difficulté D afin de décider de communiquer ou non avec ledit client (1) ou quelle information envoyer audit client (1).

7. Procédé selon l'une des revendications 2 à 6, qui comprend en outre le fait que :
- un serveur subséquent (5) obtient ladite condition de difficulté D depuis ledit contrôleur de difficulté (7) ;
- ledit client (1) récupère ladite identité de nœud persistante unique ou ladite identité de nœud persistante unique restreinte depuis le stockage ;
- ledit client (1) transfère audit serveur subséquent (5) un message TLS ClientHello (201) qui comprend ledit nombre aléatoire de client R_{c} ;
- ledit serveur subséquent (5) génère ledit nombre aléatoire de serveur Rₛ via ladite première fonction pseudo-aléatoire d'au moins ledit nombre aléatoire de client R_{c} ;
- ledit serveur subséquent (5) transfère audit client (1) un message TLS ServerHello (202) qui comprend ledit nombre aléatoire de serveur Rₛ ;
- ledit client (1) vérifie si ledit nombre aléatoire de serveur Rₛ résulte de ladite première fonction pseudo-aléatoire ;
- ledit serveur subséquent (5) génère ladite valeur privée de serveur X via une deuxième fonction pseudo-aléatoire d'au moins ledit nombre aléatoire de serveur Rₛ ;
- ledit serveur subséquent (5) obtient une valeur de générateur g du groupe Diffie-Hellman et une valeur de nombre premier p pour l'algorithme de Diffie-Hellman ;
- ledit serveur subséquent (5) calcule une valeur Diffie-Hellman de serveur Y pour ladite valeur de générateur g, ladite valeur privée de serveur X et ladite valeur de nombre premier p ;
- ledit serveur subséquent (5) transfère audit client (1) un message TLS ServerKeyExchange (204) qui comprend ladite valeur Diffie-Hellman de serveur Y, ladite valeur de générateur g et ladite valeur de nombre premier p ;
- ledit client (1) vérifie si ladite valeur Diffie-Hellman de serveur Y résulte de ladite deuxième fonction pseudo-aléatoire, et si tel est le cas :
- ledit client (1) récupère ladite valeur extraite de client W depuis la mémoire ou le stockage ou génère ladite valeur extraite de client W via ladite troisième fonction pseudo-aléatoire de ladite variable aléatoire supplémentaire v récupérée depuis la mémoire ou le stockage ;
- ledit client (1) génère ladite valeur privée de client X_{c} via ladite quatrième fonction pseudo-aléatoire d'au moins ladite valeur extraite de client W et ladite valeur Diffie-Hellman de serveur Y ;
- ledit client (1) calcule ladite valeur Diffie-Hellman de client Y_{c} pour ladite valeur de générateur g, ladite valeur privée de client X_{c} et ladite valeur de nombre premier p ;
- ledit client (1) calcule ladite valeur de clé privée partagée K à partir de ladite valeur Diffie-Hellman de serveur Y, ladite valeur privée de client X_{c} et ladite valeur de nombre premier p ;
- ledit client (1) transfère audit serveur subséquent (5) un message TLS ClientKeyExchange (210) qui comprend ladite valeur Diffie-Hellman de client Y_{c} sous une forme cryptée, en cryptant ladite valeur Diffie-Hellman de client Y_{c} avec la clé publique PK depuis ledit certificat de clé publique de serveur ; et
- ledit serveur subséquent (5) calcule ladite même valeur de clé privée partagée K à partir de ladite valeur Diffie-Hellman de client Y_{c}, ladite valeur privée de serveur X et ladite valeur de nombre premier p.

8. Procédé selon la revendication 7, qui comprend en outre le fait que :
- ledit client (1) sélectionne une nouvelle valeur aléatoire de client W' ou calcule ladite valeur aléatoire de client W' via ladite troisième fonction pseudo-aléatoire d'une nouvelle variable aléatoire v' ;
- ledit client (1) génère une valeur privée de client renouvelée X_{c}' via ladite quatrième fonction pseudo-aléatoire d'au moins ladite nouvelle valeur extraite de client W' et ladite valeur Diffie-Hellman de serveur Y ;
- ledit client (1) calcule une valeur Diffie-Hellman de client renouvelée Y_{c}' pour ladite valeur de générateur g, ladite valeur privée de client renouvelée X_{c}' et ladite valeur de nombre premier p ;
- ledit client (1) calcule une valeur de clé privée partagée renouvelée K' à partir de ladite valeur Diffie-Hellman de serveur Y, ladite valeur privée de client renouvelée X_{c}' et ladite valeur de nombre premier p ;
- ledit client (1) vérifie si ladite valeur de clé privée partagée renouvelée K' ou ladite valeur Diffie-Hellman de client renouvelée Y_{c}' satisfait ladite condition de difficulté D ou une condition de difficulté D' plus stricte obtenue depuis ledit contrôleur de difficulté (7), et si tel est le cas :
- ledit client (1) transfère audit serveur subséquent (5) un message TLS ClientKeyExchange (310) qui comprend ladite valeur Diffie-Hellman de client renouvelée Y_{c}' sous une forme cryptée, soit en cryptant ladite valeur Diffie-Hellman de client renouvelée Y_{c}' avec la clé publique PK depuis ledit certificat de clé publique de serveur subséquent, soit avec ladite valeur de clé privée partagée K, tandis que ledit message TLS ClientKeyExchange (310) peut être crypté à l'aide de ladite valeur de clé privée partagée K si ladite valeur de clé privée partagée K est transportée par-dessus la Couche d'Enregistrement TLS ; et
- ledit serveur subséquent (5) calcule ladite même valeur de clé privée partagée renouvelée K' à partir de ladite valeur Diffie-Hellman de client renouvelée Y_{c}' , ladite valeur privée de serveur X et ladite valeur de nombre premier p ; et
- ledit serveur subséquent (5) vérifie si ladite valeur de clé privée partagée renouvelée K' ou ladite valeur Diffie-Hellman de client renouvelée Y_{c}' satisfait ladite condition de difficulté D ou ladite condition de difficulté D' plus stricte afin de décider de communiquer ou non avec ledit client (1) ou quelle information envoyer audit client (1).

9. Procédé selon l'une des revendications 2 à 8, qui comprend en outre le fait que :
- ledit client (1) génère un nombre aléatoire de client renouvelé R_{c}' et transfère auxdits serveur (3) ou serveur subséquent (5) un message TLS ClientHello (401 ; 501) qui comprend ledit nombre aléatoire de client renouvelé R_{c}' ;
- lesdits serveur (3) ou serveur subséquent (5) génère un nombre aléatoire de serveur renouvelé Rₛ' via ladite première fonction pseudo-aléatoire d'au moins ledit nombre aléatoire de client renouvelé R_{c}' ;
- lesdits serveur (3) ou serveur subséquent (5) transfère audit client (1) un message TLS ServerHello (402 ; 502) qui comprend ledit nombre aléatoire de serveur renouvelé Rₛ' ;
- ledit client (1) vérifie si ledit nombre aléatoire de serveur renouvelé Rₛ' résulte de ladite première fonction pseudo-aléatoire ;
- lesdits serveur (3) ou serveur subséquent (5) génère une valeur privée de serveur renouvelée X' via ladite deuxième fonction pseudo-aléatoire d'au moins ledit nombre aléatoire de serveur renouvelé Rₛ' ;
- lesdits serveur (3) ou serveur subséquent (5) réutilise ladite valeur de générateur g du groupe Diffie-Hellman et ladite valeur de nombre premier p pour l'algorithme de Diffie-Hellman ;
- lesdits serveur (3) ou serveur subséquent (5) calcule une valeur Diffie-Hellman de serveur renouvelée Y' pour ladite valeur de générateur g, ladite valeur privée de serveur renouvelée X' et ladite valeur de nombre premier p ;
- lesdits serveur (3) ou serveur subséquent (5) transfère audit client (1) un message TLS ServerKeyExchange (404 ; 504) qui comprend ladite valeur Diffie-Hellman de serveur renouvelée Y', ladite valeur de générateur g et ladite valeur de nombre premier p ;
- ledit client (1) vérifie si ladite valeur Diffie-Hellman de serveur renouvelée Y' résulte de ladite deuxième fonction pseudo-aléatoire, et si tel est le cas :
- ledit client (1) génère une valeur extraite de client renouvelée W' en tant que valeur aléatoire ou via ladite troisième fonction pseudo-aléatoire d'une variable aléatoire supplémentaire renouvelée v' extraite ou récupérée depuis la mémoire ou le stockage ; ou ledit client (1) réutilise ladite valeur extraite de client W ou ladite variable aléatoire supplémentaire v ;
- ledit client (1) génère une valeur privée de client renouvelée X_{c}' via ladite quatrième fonction pseudo-aléatoire d'au moins ladite valeur extraite de client W ou ladite valeur extraite de client renouvelée W', et ladite valeur Diffie-Hellman de serveur renouvelée Y' ;
- ledit client (1) calcule une valeur Diffie-Hellman de client renouvelée Y_{c}' pour ladite valeur de générateur g, ladite valeur privée de client renouvelée X_{c}' et ladite valeur de nombre premier p ;
- ledit client (1) calcule une valeur de clé privée partagée renouvelée K' à partir de ladite valeur Diffie-Hellman de serveur renouvelée Y', ladite valeur privée de client renouvelée X_{c}' et ladite valeur de nombre premier p ;
- ledit client (1) vérifie si ladite valeur de clé privée partagée renouvelée K' ou ladite valeur Diffie-Hellman de client renouvelée Y_{c}' satisfait ladite condition de difficulté D ou ladite condition de difficulté D' plus stricte, et si tel est le cas :
- ledit client (1) stocke ladite valeur de générateur g, ladite valeur de nombre premier p, ledit nombre aléatoire de client renouvelée R_{c}' et ladite valeur extraite de client W ou ladite valeur extraite de client renouvelée W' pour former conjointement ladite identité de nœud persistante unique renouvelée ;
- ledit client (1) transfère auxdits serveur (3) ou serveur subséquent (5) un message TLS ClientKeyExchange (410 ; 510) qui comprend ladite valeur Diffie-Hellman de client renouvelée Y_{c}' sous une forme cryptée, soit en cryptant ladite valeur Diffie-Hellman de client renouvelée Y_{c}' avec la clé publique PK depuis ledit certificat de clé publique dudit serveur ou dudit serveur subséquent, soit avec ladite valeur de clé privée partagée K, tandis que ledit message TLS ClientKeyExchange (410 ; 510) dans son entier peut être crypté à l'aide de ladite valeur de clé privée partagée K si ladite valeur de clé privée partagée K est transportée par-dessus la Couche d'Enregistrement TLS ; et
- lesdits serveur (3) ou serveur subséquent (5) calcule ladite même valeur de clé privée partagée renouvelée K' à partir de ladite valeur Diffie-Hellman de client renouvelée Y_{c}', ladite valeur privée de serveur renouvelée X' et ladite valeur de nombre premier p.

10. Procédé selon l'une des revendications 2 à 8, qui comprend en outre le fait que :
- ledit client (1) génère une valeur extraite de client tentée W" en tant que valeur aléatoire ou via ladite troisième fonction pseudo-aléatoire d'une variable aléatoire supplémentaire tentée v" extraite ou récupérée depuis la mémoire ou le stockage ;
- ledit client (1) calcule une valeur privée de client tentée X_{c}" via ladite quatrième fonction pseudo-aléatoire d'au moins ladite valeur extraite de client tentée W" et ladite valeur Diffie-Hellman de serveur Y ;
- ledit client (1) calcule une valeur Diffie-Hellman de client tentée Y_{c}" pour ladite valeur de générateur g, ladite valeur privée de client tentée X_{c}" et ladite valeur de nombre premier p ;
- ledit client (1) calcule une valeur de clé privée partagée tentée K" à partir de ladite valeur Diffie-Hellman de serveur Y, ladite valeur privée de client tentée X_{c}" et ladite valeur de nombre premier p ;
- ledit client (1) vérifie si ladite valeur de clé privée partagée tentée K" ou ladite valeur Diffie-Hellman de client tentée Y_{c}" satisfait ladite condition de difficulté D ou une condition de difficulté D" plus stricte obtenue depuis ledit contrôleur de difficulté (7), et si tel est le cas :
- ledit client (1) stocke ladite valeur de générateur g, ladite valeur de nombre premier p, ledit nombre aléatoire de client R_{c} et ladite valeur extraite de client tentée W" ou ladite variable aléatoire supplémentaire tentée v" pour former conjointement une identité de nœud persistante unique subséquente ;
- ledit client (1) transfère auxdits serveur (3) ou serveur subséquent (5) un message TLS ClientHello (601 ; 701) qui comprend ledit nombre aléatoire de client R_{c} ;
- lesdits serveur (3) ou serveur subséquent (5) génère ledit nombre aléatoire de serveur Rₛ via ladite première fonction pseudo-aléatoire d'au moins ledit nombre aléatoire de client R_{c} ;
- lesdits serveur (3) ou serveur subséquent (5) transfère audit client (1) un message TLS ServerHello (602 ; 702) qui comprend ledit nombre aléatoire de serveur Rₛ ;
- ledit client (1) vérifie si ledit nombre aléatoire de serveur renouvelé Rₛ résulte de ladite première fonction pseudo-aléatoire ;
- lesdits serveur (3) ou serveur subséquent (5) génère ladite valeur privée de serveur X via ladite deuxième fonction pseudo-aléatoire d'au moins ledit nombre aléatoire de serveur Rₛ ;
- lesdits serveur (3) ou serveur subséquent (5) réutilise ladite valeur de générateur g du groupe Diffie-Hellman et ladite valeur de nombre premier p pour l'algorithme de Diffie-Hellman ;
- lesdits serveur (3) ou serveur subséquent (5) calcule ladite valeur Diffie-Hellman de serveur Y pour ladite valeur de générateur g, ladite valeur privée de serveur X et ladite valeur de nombre premier p ;
- lesdits serveur (3) ou serveur subséquent (5) transfère audit client (1) un message TLS ServerKeyExchange (604 ; 704) qui comprend ladite valeur Diffie-Hellman de serveur Y, ladite valeur de générateur g et ladite valeur de nombre premier p ;
- ledit client (1) vérifie si ladite valeur Diffie-Hellman de serveur Y résulte de ladite deuxième fonction pseudo-aléatoire, et si tel est le cas :
- ledit client (1) transfère auxdits serveur (3) ou serveur subséquent (5) un message TLS ClientKeyExchange (610 ; 710) qui comprend ladite valeur Diffie-Hellman de client tentée Y_{c}" sous une forme cryptée, soit en cryptant ladite valeur Diffie-Hellman de client tentée Y_{c}'' avec la clé publique PK depuis ledit certificat de clé publique dudit serveur ou dudit serveur subséquent, soit avec ladite valeur de clé privée partagée K ou ladite valeur de clé privée partagée renouvelée K', tandis que ledit message TLS ClientKeyExchange (610 ; 710) dans son entier peut être crypté à l'aide de ladite valeur de clé privée partagée K ou de ladite valeur de clé privée partagée renouvelée K', si ladite valeur de clé privée partagée K ou ladite valeur de clé privée partagée renouvelée K' est transportée par-dessus la Couche d'Enregistrement TLS ; et
- lesdits serveur (3) ou serveur subséquent (5) calcule ladite même valeur de clé privée partagée tentée K" à partir de ladite valeur Diffie-Hellman de client tentée Y_{c}", ladite valeur privée de serveur X et ladite valeur de nombre premier p.

11. Procédé selon l'une des revendications 2 à 10, qui comprend en outre le fait que :
- lesdits serveur (3) ou serveur subséquent (5) transmet audit client (1) un message TLS Certificat qui comprend ladite valeur Diffie-Hellman de serveur Y, ladite valeur Diffie-Hellman de serveur renouvelée Y' et/ou ladite clé publique PK de serveur dans ledit certificat de clé publique de serveur.

12. Procédé selon l'une des revendications 2 à 11, dans lequel :
un protocole d'agrément de clé Diffie-Hellman de Courbe Elliptique est utilisé pour établir ladite valeur de clé privée partagée K, ladite valeur de clé privée partagée renouvelée K' ou ladite valeur de clé privée partagée tentée K" ; et
des paramètres cryptographiques a et b sont utilisés à la place de ladite valeur de générateur g du groupe Diffie-Hellman et de ladite valeur de nombre premier p pour l'algorithme de Diffie-Hellman.

13. Client (1) configuré pour générer et utiliser une identité de nœud persistant unique afin d'identifier et authentifier ledit client (1) dans un réseau de télécommunication (2), dans lequel ledit client (1) est configuré pour établir une connexion TLS sécurisée entre ledit client (1) et un serveur (3) et pour générer en collaboration avec ledit serveur (3) une valeur de clé privée partagée K via un algorithme de calcul avec une condition de difficulté D obtenue depuis un contrôleur de difficulté (7) et qui limite le nombre d'identités de nœud valides, ledit client (1) étant configuré pour :
- obtenir ladite condition de difficulté D depuis ledit contrôleur de difficulté (7) ;
- générer un nombre aléatoire de client R_{c} ;
- transférer audit serveur (3) un message TLS ClientHello (101) qui comprend ledit nombre aléatoire de client R_{c} pour permettre audit serveur (3) de :
▪ générer un nombre aléatoire de serveur Rₛ via une première fonction pseudo-aléatoire d'au moins ledit nombre aléatoire de client R_{c} ;
- recevoir depuis ledit serveur (3) un message TLS ServerHello (102) qui comprend ledit nombre aléatoire de serveur Rₛ ;
- vérifier si ledit nombre aléatoire de serveur Rₛ résulte de ladite première fonction pseudo-aléatoire ;
- recevoir, depuis ledit serveur (3) en outre configuré pour :
▪ générer une valeur privée de serveur X via une deuxième fonction pseudo-aléatoire d'au moins ledit nombre aléatoire de serveur Rₛ ;
▪ obtenir une valeur de générateur g du groupe Diffie-Hellman et une valeur de nombre premier p pour l'algorithme de Diffie-Hellman ; et
▪ calculer une valeur Diffie-Hellman de serveur Y pour ladite valeur de générateur g, ladite valeur privée de serveur X et ladite valeur de nombre premier p ;
un message TLS Certificate (103) ou un message TLS ServerKeyExchange (104) qui comprend ladite valeur Diffie-Hellman de serveur Y, ladite valeur de générateur g et ladite valeur de nombre premier p ;
- vérifier si ladite valeur Diffie-Hellman de serveur Y résulte de ladite deuxième fonction pseudo-aléatoire via les mêmes étapes que ledit serveur (3) pour le calcul de Y à l'aide de ladite première fonction pseudo-aléatoire, ladite deuxième fonction pseudo-aléatoire, ledit nombre aléatoire de client R_{c}, ladite valeur de générateur g et ladite valeur de nombre premier p, et si tel est le cas :
- générer une valeur extraite de client W en tant que valeur aléatoire ou via une troisième fonction pseudo-aléatoire d'une variable aléatoire supplémentaire v extraite ou récupérée depuis une mémoire ou un stockage ;
- générer une valeur privée de client X_{c} via une quatrième fonction pseudo-aléatoire d'au moins ladite valeur extraite de client W et ladite valeur Diffie-Hellman de serveur Y ;
- calculer une valeur Diffie-Hellman de client Y_{c} pour ladite valeur de générateur g, ladite valeur privée de client X_{c} et ladite valeur de nombre premier p ;
- calculer ladite valeur de clé privée partagée K à partir de ladite valeur Diffie-Hellman de serveur Y, ladite valeur privée de client X_{c} et ladite valeur de nombre premier p ;
- vérifier si ladite valeur de clé privée partagée K ou ladite valeur Diffie-Hellman de client Y_{c} satisfait ladite condition de difficulté D, et si tel est le cas :
- stocker ladite valeur de générateur g, ladite valeur de nombre premier p, ledit nombre aléatoire de client R_{c} et ladite valeur extraite de client W ou ladite variable aléatoire supplémentaire v pour former conjointement ladite identité de nœud persistante unique ; et
- transférer audit serveur (3) un message TLS ClientKeyExchange (110) qui comprend ladite valeur Diffie-Hellman de client Y_{c} sous une forme cryptée, en cryptant ladite valeur Diffie-Hellman de client Y_{c} avec la clé publique PK depuis ledit certificat de clé publique de serveur pour permettre audit serveur (3) de :
▪ calculer ladite même valeur de clé privée partagée K à partir de ladite valeur Diffie-Hellman de client Y_{c}, ladite valeur privée de serveur X et ladite valeur de nombre premier p.

14. Serveur (3, 5) configuré pour générer et utiliser une identité de nœud persistant unique afin d'identifier et authentifier un client (1) dans un réseau de télécommunication (2), dans lequel ledit serveur (3, 5) est configuré pour établir une connexion TLS sécurisée entre ledit client (1) et ledit serveur (3, 5) et pour générer en collaboration avec ledit client (1) une valeur de clé privée partagée K via un algorithme de calcul avec une condition de difficulté D obtenue depuis un contrôleur de difficulté (7) et qui limite le nombre d'identités de nœud valides, ledit serveur (3) étant configuré pour :
- obtenir ladite condition de difficulté D depuis ledit contrôleur de difficulté (7) ;
- recevoir, depuis ledit client (1) configuré pour :
▪ obtenir ladite condition de difficulté D depuis ledit contrôleur de difficulté (7) ; et
▪ générer un nombre aléatoire de client R_{c} ;
un message TLS ClientHello (101) qui comprend ledit nombre aléatoire de client R_{c} ;
- générer un nombre aléatoire de serveur Rₛ via une première fonction pseudo-aléatoire d'au moins ledit nombre aléatoire de client R_{c} ;
- transférer audit client (1) un message TLS ServerHello (102) qui comprend ledit nombre aléatoire de serveur Rₛ pour permettre audit client (1) de :
▪ vérifier si ledit nombre aléatoire de serveur Rₛ résulte de ladite première fonction pseudo-aléatoire ;
- générer une valeur privée de serveur X via une deuxième fonction pseudo-aléatoire d'au moins ledit nombre aléatoire de serveur Rₛ ;
- obtenir une valeur de générateur g du groupe Diffie-Hellman et une valeur de nombre premier p pour l'algorithme de Diffie-Hellman ;
- calculer une valeur Diffie-Hellman de serveur Y pour ladite valeur de générateur g, ladite valeur privée de serveur X et ladite valeur de nombre premier p ;
- transférer audit client (1) un message TLS Certificate (103) ou un message TLS ServerKeyExchange (104) qui comprend ladite valeur Diffie-Hellman de serveur Y, ladite valeur de générateur g et ladite valeur de nombre premier p pour permettre audit client (1) de :
▪ vérifier si ladite valeur Diffie-Hellman de serveur Y résulte de ladite deuxième fonction pseudo-aléatoire via les mêmes étapes que ledit serveur (3) pour le calcul de Y à l'aide de ladite première fonction pseudo-aléatoire, ladite deuxième fonction pseudo-aléatoire, ledit nombre aléatoire de client R_{c}, ladite valeur de générateur g et ladite valeur de nombre premier p, et si tel est le cas :
▪ générer une valeur extraite de client W en tant que valeur aléatoire ou via une troisième fonction pseudo-aléatoire d'une variable aléatoire supplémentaire v extraite ou récupérée depuis une mémoire ou un stockage ;
▪ générer une valeur privée de client X_{c} via une quatrième fonction pseudo-aléatoire d'au moins ladite valeur extraite de client W et ladite valeur Diffie-Hellman de serveur Y ;
▪ calculer une valeur Diffie-Hellman de client Y_{c} pour ladite valeur de générateur g, ladite valeur privée de client X_{c} et ladite valeur de nombre premier p ;
▪ calculer ladite valeur de clé privée partagée K à partir de ladite valeur Diffie-Hellman de serveur Y, ladite valeur privée de client X_{c} et ladite valeur de nombre premier p ;
▪ vérifier si ladite valeur de clé privée partagée K ou ladite valeur Diffie-Hellman de client Y_{c} satisfait ladite condition de difficulté D, et si tel est le cas :
▪ stocker ladite valeur de générateur g, ladite valeur de nombre premier p, ledit nombre aléatoire de client R_{c} et ladite valeur extraite de client W ou ladite variable aléatoire supplémentaire v pour former conjointement ladite identité de nœud persistante unique ;
- recevoir depuis ledit client (1) un message TLS ClientKeyExchange (110) qui comprend ladite valeur Diffie-Hellman de client Y_{c} sous une forme cryptée, en cryptant ladite valeur Diffie-Hellman de client Y_{c} avec la clé publique PK depuis ledit certificat de clé publique de serveur ; et
- calculer ladite même valeur de clé privée partagée K à partir de ladite valeur Diffie-Hellman de client Y_{c}, ladite valeur privée de serveur X et ladite valeur de nombre premier p.
